# EUROPEAN PATENT SPECIFICATION

(11) **EP 0 994 650 B1**
(45) Date of publication and mention of the grant of the patent: **25.02.2004**
(21) Application number: 98931664.1
(22) Date of filing: 26.06.1998
(51) Int. Cl.: A01N 25/00

(54) **MICROPARTICLES CONTAINING AGRICULTURAL ACTIVE INGREDIENTS**
LANDWIRTSCHAFTLICH AKTIVE INHALTSSTOFFE ENTHALTENDE MIKROPARTIKEL
MICROPARTICULES CONTENANT DES PRINCIPES ACTIFS AGRICOLES

(30) Priority: 30.06.1997 US 51285 P; 25.06.1998 US 104565
(43) Date of publication of application: 26.04.2000
(73) Proprietor: Monsanto Technology LLC, St. Louis, Missouri 63167 (US)
(72) Inventor: BOTTS, M. Francis, St. Peters, MO 63376 (US); KOHN, Frank, C., St. Louis, MO 63146 (US); MILLER, Maria, L., Chesterfield, MO 63005 (US)
(74) Representative: Bosch, Henry A.
(86) International application number: PCT/US1998/013378
(87) International publication number: WO 1999/000013

(56) References cited:
- EP-A- 0 004 758
- EP-A- 0 201 214
- EP-A- 0 356 240
- AU-A- 2 895 189
- DE-A- 3 150 631
- FR-A- 2 702 929
- US-A- 3 929 453
- US-A- 4 303 642
- US-A- 4 512 969
- US-A- 5 302 654

## Description

### BACKGROUND OF THE INVENTION

This invention relates to compositions and methods for controlled release of agricultural chemicals.

Most agricultural chemicals, such as biocides, chemical hybridizing agents, or plant growth regulators are applied to plants, to seeds, or to the soil at the beginning of the growing season and must maintain their effectiveness throughout the period of plant growth, which can last for several months. However; the chemicals may be degraded by chemical or biological processes and are removed by wind or water from the site of application. As a result, it is necessary to apply high rates of to maintain the desired effect over time or to apply the chemicals repeatedly during the growing season. However, high rates of certain agricultural chemicals can be phytotoxic. Many fungicides, especially triazole fungicides, can be too phytotoxic when applied in amounts that are necessary to provide adequate disease control.

Patents and published patent applications disclosing various controlled-release formulations include U.S. Patents No. 4,172,119, 4,915,947, 5,225,278, 5,277,979, and 5,725,869; European Patent Publications 0 004 758-A2, 0 018 119-A1, and 0 763 510-A1; and PCT Application WO 88/08300.

AU-2895189 discloses in Example 1 the preparation of a dispersion of controlled release ethylene-vinyl acetate (EVA) copolymer microspheres containing pesticide, the pesticide being in this case chlorpyrifos. The result is a dispersion of microspheres having a maximum size below 14.4 µm. Example 3 shows the same preparation with the addition of filler (bauxite tailings).

DE-3150631 (cf. claims 1 and 7-10) discloses a method for treating seeds whereby the seeds are dressed with a plant-protection agent (I) which is phytotoxic at high concentrations by coating the seeds with a composition prepared by adding (I) to a dissolved or dispersed mixture of a hydrophobic substance (II) and an (in)organic binder (III) in water or an inorganic solvent, and homogenizing, drying and comminuting the mixture to give a particle size of less than 1 mm, preferably 0.25-0:5 mm. The seeds are coated with 1-150g of the composition per 100,000 seeds, the amount of (I) used being such that its phytotoxic and germination-inhibiting effects are avoided due to its slow release from the coating, while release of (I) continues after germination and during the growth period at a rate which is less than that of (I) alone but still sufficient to protect the plants from pests. (1) may be a fungicide, insecticide, nematocide, acaricide, molluscicide, rodenticide or plant growth regulator, esp. a carbamate or organophosphorus insecticide.

EP-0004758 dicloses an insecticidal particulate composition comprising methomyl in a water-insoluble polymer.

EP-0201214 discloses (cf. page 3, lines 6-11) polymeric microparticles having bound therewith a pesticide and having a diameter of 0.01-250 µm, preferably 0.01-2 µm. Example 3 shows an antifungal microparticle composition where the microparticles have an average particle size of 0.28 µm and example 5 an insecticidal microparticle composition with an average particle size of 52 µm. Example 6 shows the preparation of microparticles having antifungal activity where the average particle size is 200 µm.

FR-2702929 dicloses microparticles which contain at least one biocide in a quantity not exceeding 50 wt. %, preferably 15 wt. % (cf. bottom of page 4). The microparticles may be made of polyethylene (cf. page 5, lines 8 and 9) and are generally spherical with a diameter of 0.05-2 mm (50-200 µm), preferably 0.1-1 mm (100-1000 µm) (cf. bottom of page 5).

US-4303642 dicloses (cf. column 1, lines 31-42) stable polymer latexes in particulate form containing chlorpyrifos or chlorpyrifos-methyl insecticide. whereby the particle size is 0.03-20 µm, preferably 0.1-10 µm, and most preferably 0.1-1 µm.

US-5302654 is directed to polymer microparticfes having immobilized therein a water-soluble substance such as an oil-soluble dye or pigment.

US-4512969 dicloses compositions containing loaded particles of from 0.02-0.2 µm in average diameter consisting of a loadable polymer. A hydrophobic miticide, insecticide or herbicide may be loaded into and distributed throughout the particles.

US-3929453 concerns composites of lignin and biologically active materials. The composites consist of a biologically active agent dispersed in the alkali lignin material in a ratio of 1:1 to 1:10. Herbicides, insecticides and fungicides are listed as biologically active agent.

There remains is a need for controlled-release formulations by which an agricultural chemical can be delivered to a plant over the entire growing season at rates that are agriculturally effective, while reducing or eliminating the phytotoxicity of the chemical to the plant or to seeds. Preferably, such formulations would include an amount of an active ingredient that is close to the minimum amount needed to obtain the desired effect in order to reduce environmental impacts and to reduce costs.

### SUMMARY OF THE INVENTION

We have discovered controlled-release formulations for agricultural chemicals that comprise microparticles in which one or more agricultural active ingredients are dispersed or distributed in a polymeric matrix. Such controlled-release formulations are safe when applied to seeds or to plants even though they contain levels of active ingredients that would be phytotoxic if applied to the seeds or plants in standard fast-release formulations. Microparticles according to the present invention can release an active ingredient(s) at beneficial levels throughout the growth period of common crop plants (e.g., for at least two to twelve weeks or more) and therefore can reduce or eliminate the need for subsequent applications of the agricultural chemical. The rate of release of agricultural chemicals, and the period over which effective amounts of such chemicals can be released, can be tailored as desired. Such controlled-release compositions increase the period during which an agricultural chemical is effective, reduce the initial toxicity of the chemical to seeds or crop plants, expand the range of compounds that can be used for agricultural applications, and decrease the environmental impact of chemical treatment.

According to one aspect of the invention, controlled-release compositions for delivering an agricultural chemical to a plant comprise microparticles having an average diameter of 0.2 microns to 200 microns. The microparticles each comprise a polymer matrix and at least one agricultural chemical selected from cyproconazole, epoxiconazole or tebuconazole, distributed throughout the matrix. The microparticles include 1 to 50% by weight of the agricultural chemical and 50% to 99% by weight of the polymer matrix.

According to another aspect of the invention, such compositions include suspensions of the microparticles in an aqueous medium, wettable powders, wettable granules, dry granules, and seed coatings, for example. According to at, least some embodiments of the invention, the microparticles adhere to a surface of a seed or plant.

According to another aspect of the invention, such compositions include an amount of the agricultural chemical and release the agricultural chemical at a rate such that the composition delivers an agriculturally active amount of the agricultural chemical to the plant for a period of at least two weeks to twelve weeks, preferably throughout the growth period of the plant.

Such compositions reduce the phytotoxicity of the agricultural chemical by at least two-fold (as compared to conventional fast-release formulations of the chemical). For example, in the case of seed coating compositions according to the present invention, the composition can include an amount of the agricultural chemical that would be substantially phytotoxic if applied to the surface of the seed as a fast-release formulation of the agricultural chemical.

According to another aspect of the invention, the polymer is selected from the group consisting of poly(methylmethacrylate), poly(lactic acid), poly(lactic acid-glycolic acid) copolymers, cellulose acetate butyrate, poly(styrene), hydroxybutyric acid-hydroxyvaleric acid copolymers, styrene maleic anhydride copolymers, poly(methylvinyl ether-maleic acid), poly(caprolactone), poly(n-amylmethacrylate), wood rosin, polyanhydrides, polyorthoesters, poly(cyanoacrylates), poly(dioxanone), ethyl cellulose, ethyl vinyl acetate polymers; poly(ethylene glycol), poly(vinylpyrrolidone), acetylated mono-, di-, and trigylcerides, poly(phosphazene), chlorinated natural rubber, vinyl polymers, polyvinyl chloride, hydroxyalkylcelluloses, polybutadiene, polyurethane, vinylidene chloride polymers, styrene-butadiene copolymers, styrene-acrylic copolymers, alkylvinylether polymers, cellulose acetate phthalates, ethyl vinyl pthalates, cellulose triacetate, polyanhydrides, polyglutamates, polyhydroxy butyrates, polyvinyl acetate, vinyl acetate-ethylene copolymers, vinyl acetate-vinylpyrrolidone copolymers, acrylic polymers, alkyl acrylate polymers, aryl acrylate polymers, aryl methacrylate polymers, poly(caprolactams), epoxy resins, polyamine epoxy resins, polyamides, polyvinyl alcohol polymers, polyalkyd resins, phenolic resins, abietic acid resins, silicones, polyesters, and copolymers and combinations thereof.

According to another aspect of the invention, such compositions also include a dispersing agent, including methyl cellulose, poly(vinyl alcohol), lecithin, and combinations thereof.

According to another aspect of the invention, seeds are provided that comprise such compositions, e.g., as seed coatings.

According to another aspect of the invention, methods are provided for delivering an agricultural chemical to a plant comprising providing to the plant a composition as discussed above, for example, by application of the composition to soil, application of the composition to foliage of the plant, and coating a seed prior to germination of the seed to produce the plant. When applied to soil or foliage, for example, the composition can be applied, for example, in an amount such that about 1 g to about 10 kg of the agricultural chemical is applied per hectare. When applied as a seed coating, the composition can be applied in an amount such that about I gram to about 500 grams of the agricultural chemical is applied to 100 kg of seed.

According to another aspect of the invention, methods are provided for producing the compositions described above. Such methods include the steps of: (a) dissolving at least one agricultural chemical selected from cyproconazole, epoxyconazole or tebuconazole, and a polymer in an organic solvent to form a hydrophobic solution; (b) mixing the hydrophobic solution and an aqueous medium at a shear rate and for a time period sufficient to produce an emulsion having droplets of the hydrophobic solution dispersed in the aqueous medium; and (c) evaporating the organic solvent from the emulsion to produce a plurality of microparticles having an average diameter of 0.2 micron to 200 microns and comprising said at least one agricultural chemical distributed throughout a polymer matrix. According to some embodiments of the invention, such methods include one or more of the further steps of: dissolving a dispersing agent in an aqueous solution to produce the hydrophilic solution; and suspending the microparticles in an aqueous medium.

Other aspects of the present invention will become apparent to those skilled in the art upon studying this disclosure and the accompanying claims.

### BRIEF DESCRIPTION OF THE DRAWINGS

FIG. 1 shows the effect of matrix microparticle formulations of Example 7 and Alto® 005LS when used as seed treatments on wheat at various-rates (g cyproconazole per 100 kg seed), expressed as the height of germinating wheat at 11 days after planting (DAP) as a percent of the height of untreated controls.
FIG. 2 shows the effect of matrix microparticle formulations of Example 8 and Alto® 005LS when used as seed treatments on wheat at various rates (g cyproconazole per 100 kg seed), expressed as the height of germinating wheat at 10 DAP as a percent of the height of untreated controls.
FIG. 3 shows the effect of matrix microparticle formulations of Example 9 and Alto® 005LS when used as seed treatments on wheat at various rates (g cyproconazole per 100 kg seed), expressed as the height of germinating wheat at 10 DAP as a percent of the height of untreated controls.
FIG. 4 shows the effect of matrix microparticle formulations of Example 10 and Alto® 005LS when used as seed treatments on wheat at various rates (g cyproconazole per 100 kg seed), expressed as the height of germinating wheat at 11 DAP as a percent of the height of untreated controls.
FIGS. 5 and 6 show the effect of a matrix microparticle formulation of Example 11, NBP5881012C, and Alto® 005LS when used as a seed treatment on wheat at various rates (g cyproconazole per 100 kg seed), expressed as the height of germinating wheat at 10 DAP (FIG. 5) or 9 DAP (FIG. 6) as a percent of the height of untreated controls.
FIG. 7 shows the effect of matrix microparticle formulations of Example 12, NBP 5881012C, NBP 5890983A, and Alto® 005LS, when used as seed treatments on wheat at various rates (g cyproconazole per 100 kg seed), expressed as the height of germinating wheat as a percent of the height of untreated controls at 9 DAP.
FIG. 8 shows the effect of matrix microparticle formulations of Example 12, NBP 5890983A, NBP 5890983B, and Alto® 005LS, when used as seed treatments on wheat at various rates (g cyproconazole per 100 kg seed), expressed as the height of germinating wheat as a percent of the height of untreated controls at 10 DAP.
FIG. 9 shows the effect of matrix microparticle formulations of Example 13, NBP 5890983C and NBP 5890983D, and Alto® 005LS, when used as seed treatments on wheat at various rates (g cyproconazole per 100 kg seed), expressed as the height of germinating wheat as a percent of the height of untreated controls at 10 DAP.
FIG. 10 shows the effect of a matrix microparticle formulation of Example 13, NBP 5890977D, and Alto® 005LS, when used as seed treatments on wheat at various rates (g cyproconazole per 100 kg seed), expressed as the height of germinating wheat as a percent of the height of untreated controls at 10 DAP.
FIG. 11 shows the effect of matrix microparticle formulations of Example 14 and Alto® 005LS when used as seed treatments on wheat at various rates (g cyproconazole per 100 kg seed), expressed as the height of germinating wheat as a percent of the height of untreated controls at 10 DAP.
FIG. 12 shows the effect of matrix microparticle formulations of Example 15 and Alto® 005LS when used as seed treatments on wheat at various rates (g cyproconazole per 100 kg seed), expressed as the height of germinating wheat as a percent of the height of untreated controls at 10 DAP.
FIG. 13 shows the effect of matrix microparticle formulations of Example 16 and Alto® 005LS when used as seed treatments on wheat at various rates (g cyproconazole per 100 kg seed), expressed as the height of germinating wheat as a percent of the height of untreated controls at 10 DAP.
FIG. 14 shows the effect of matrix microparticle formulations of Examples 17 and 18, MON 38410 and MON 38411, respectively, and Raxil® when used as seed treatments on wheat at various rates (g tebuconazole per 100 kg seed), expressed as the height of germinating wheat as a percent of the height of untreated controls at 11 DAP.
FIG. 15 shows the effect of matrix microparticle formulations of Examples 19 and 20, MON 24530 and MON 24540, respectively, and Opus® when used as seed treatments on wheat at various rates (g epoxiconazole per 100 kg seed), expressed as the height of germinating wheat as a percent of the height of untreated controls at 11 DAP.
FIG. 16 shows the effect of matrix microparticle formulations of Example 21 at an application rate of 16 g cyproconazole per 100 kg seed and Alto® 005LS when used as seed treatments on wheat, expressed as a percent of the height of untreated controls at 8 DAP.
FIG. 19 shows the effects of foliar applications of MON 38412, MON 24555, Raxil®, and Opus® on the vigor of soybean plants five days after treatment (on a scale of 1-5, untreated control plants =5).
FIG. 20 shows the effects of MON 24555, Opus® , MON 38412, and Raxil® when used as seed treatments on soybeans at various application rates, expressed as a percent of untreated controls at 9 days after planting.
FIG. 21 shows the effectiveness against powdery mildew of wheat of seed treatments employing MON 38414 (30,45, and 60 g tebuconazole/100 kg seed) and Raxil® (30 g tebuconazole/100 kg seed (42 days after planting).
FIG. 22 shows the effectiveness against powdery mildew of wheat of seed treatments employing MON 38414 and MON 38416 (45 and 60 g active ingredient/100 kg seed) and Raxil® (30 g tebuconazole/100 kg seed) (44 days after planting).
FIG. 23 shows control of brown rust of wheat (second leaf) by seed coatings comprising matrix microparticle formulations 5932839A, MON 24682, MON 24647 (each at 32 g cyproconazole per 100 kg seed), and Alto® 005LS (1 g cyproconazole per 100 kg seed). Plants were inoculated 20 DAP. Disease severity in untreated controls was 61.3%.

### DETAILED DESCRIPTION OF THE INVENTION

The matrix microparticle formulations of this invention are useful in agriculture for a number of purposes, including, for example, the control of seed borne and soil-borne pathogens and pests, as well as pests affecting above-ground portions of plants (stems, foliage, flowers, fruits).

Controlled-release formulations according to the present invention substantially reduce the phytotoxicity of an agricultural chemical to a seed or a plant compared to a standard fast-release formulation of the chemical (i.e., one having a release rate that is substantially similar to that of the unformulated chemical). That is, such controlled-release formulations increase the "safety" of (or "safen"), the agricultural chemical. Therefore, for a given level of phytotoxicity, more of the chemical can be applied to a seed or a plant in the form of a controlled-release formulation according to the present invention than in a standard fast-release formulation. Preferably, a controlled-release formulation according to the present invention safens a particular chemical by at least two-fold, more preferably by at least five-fold, yet more preferably by at least ten-fold, and most preferably by at least twenty-fold or more. In fact, we have applied greater than one hundred times the amount of standard formulations of certain phytotoxic chemicals with only minimal injury to plants. As shown in the Examples below, the safening of various agricultural chemicals such as triazole fungicides permits their use as seed treatments at levels that would otherwise prevent or slow germination or stunt the growth of plants that germinate from the seeds, increasing the effectiveness of such fungicides against various pathogens and pests.

Matrix microparticles according to the invention can be used according to any conventional formulation, including but not limited to: a suspension or slurry of matrix microparticles in an aqueous medium (e.g., water); wettable powders, wettable granules (dry flowable), and dry granules. If formulated as a suspension or slurry, a convenient formulation for storage and shipping, the concentration of the active ingredient in the formulation is preferably 0.5% to 50% by weight (w/w), preferably 5% to 40%. This concentration can be adjusted up or down based on the relative proportion of matrix microparticles and carrier medium (solid or liquid).

**Matrix microparticles**. The term "matrix" is defined as a surrounding material in which another material is entrapped, embedded, dissolved or dispersed. Microparticles of the present invention include a matrix that includes one or more polymers and one or more active ingredients that are/distributed throughout the matrix. The microparticles may also include one or more inactive ingredients or additives (such as dispersants, for example). The microparticles of the present invention differ from "microcapsules," in which a polymeric shell surrounds a liquid or solid core that contains an active ingredient. In at least some embodiments of the microparticles of the present invention, the final product appears in freeze-fracture electron micrographs as solid, generally spherical particles that appear solid throughout, indicating that the active ingredient(s) is molecularly distributed or dispersed substantially uniformly throughout the matrix material. However, it is possible in at least some embodiments that an active ingredient may be macromolecularly distributed in the matrix, i.e., that a plurality of particles of the active ingredient are dispersed in the matrix.

The agriculturally active ingredient(s) comprises at least 1.0% to 50% by weight, preferably at least 15% by weight of the microparticles of the present invention. The matrix constitutes from 50% to 99% by weight of the microparticles, preferably 50% to 90%. It is most economical if the microparticle comprises a high proportion of the active ingredient(s). If the proportion of matrix components to entrapped active ingredient(s) is too great, the rate of release of the entrapped material is generally too slow as to be effective and the amount of active ingredient(s) in the formulation is reduced, increasing the cost of an effective amount of the final product. If the proportion of the matrix component to the entrapped material component is too small, the rate of release will generally be too high, leading to phytotoxicity and reducing the period of effectiveness of the active ingredient. As the concentration of the active ingredient increases in the microparticle, release rates also generally increase.

The average matrix component weight, as a percent of the total weight of the matrix microparticle (combined weight of matrix, active ingredients) and any inactive ingredients entrapped in the polymer matrix), can be estimated from the amount of ingredients in the composition for preparing the product, assuming that the ingredients mix uniformly and completely.

Microparticle preparations of the present invention have average particle sizes in the range from 0.2 microns to 200 microns in diameter, more preferably between 1 micron and 50 microns in diameter, yet more preferably 3 microns to 50 microns in diameter. Smaller average particle sizes generally have a higher release rate and area coverage of active ingredient, together with a higher activity and phytotoxicity of the active ingredient. Conversely, larger average microparticle sizes are associated with low area coverage and reduced phytotoxicity, but also lower activity and reduced phytotoxicity. In addition, the small size of the microparticles of the present invention permit such microparticles to be taken up by a plant together with soil water and be transported throughout the plant, effecting systemic. delivery of active ingredients. The size of the matrix microparticles is controlled during the process of entrapment by employing a mixing, stirring, or agitating (including homogenizers and sonicators) means at a suitable rate of speed to form droplets of the ingredients to be entrapped.

The particle size of the matrix microparticles of this invention is measured by using a microscope with a calibrated reticle and visually estimating the average particle size. Alternatively, the size can be determined by electronic means using a Coulter LS Counter or by laser light scattering. Microscopic determination generally is within ±5 microns of the size measured by the Coulter Counter. From the distribution of microparticle sizes, d₁₆, d₅₀ and d₈₄ values are determined and plotted in a log probability plot. The d₁₆ value represents the size (diameter in microns) at which 16 weight percent of the capsules in the sample are equal to or larger than d₁₆, d₅₀ represents the size at which 50 weight percent of the capsules are equal to or larger than d₅₀, and d₈₄ represents the size at which 84 weight percent of the microparticles are equal to or larger than d₈₄.

Matrix microparticles of the present invention preferably adhere to the surface of seeds and plants. Without being limited by theory, it is thought that the matrix microparticles become trapped in microhairs or in crevices on the seed or plant surfaces. Adhesion of the microparticles to seeds and plants can be enhanced by the use of conventional "sticking agents" or other compounds that have been used for applying various coatings to seeds.

Microparticles can affect the mobility of an active ingredient in soil, since the binding of the matrix material to soil particles can be substantially different than the binding of the active ingredient itself. As a result, depending on the matrix materials selected, compositions according to the present invention can increase the effectiveness of agricultural chemicals that would be rendered less effective due to their tight binding. to soil particles.

Also encompassed by the present invention. are microparticles according to the present invention that are encapsulated or coated using conventional methods and materials in order to provide further control of release of active ingredients, add additional active or inactive ingredients, or confer desirable properties to the resulting product.

**Polymers.** The term "polymer" or "polymeric material" as used in this invention is taken to mean either a single polymer or copolymer or a combination of different polymers or copolymers.

A matrix material is selected so that the rate of release of the active ingredient provides an "agriculturally effective amount" of the active ingredient to a seed or a plant, i.e., an amount of the active ingredient that is effective to achieve adequate crop protection or other desired agricultural activities characteristically associated with the agricultural chemical. Thus, for a biocide, an agriculturally effective amount is an amount that is sufficient to provide commercially acceptable control of a pathogen or pest. Preferably, the active ingredient is released at a rate that does not cause "substantial phytotoxicity," i.e., does not reduce the growth or vigor of the plant to commercially unacceptable levels or produce other types of unacceptable damage to the plant. Preferably, the active ingredient is released at beneficial levels throughout the period of germination, emergence, and/or later developmental stages of the crop or plant, and most preferably throughout the entire growth period of the plant. The active ingredient may be released by diffusion from the matrix or by the degradation or dissolution of the matrix in the plant, soil or foliar environment. In addition, the polymer and breakdown products thereof, if any, should not interfere with the effectiveness of the active ingredient (or other components, such as the dispersing agent) or be substantially phytotoxic to the seed, seedling or plant.

Examples of suitable polymers for the practice of this invention include but are not limited to the following non-exhaustive list of polymers (and copolymers and mixtures thereof):
poly(methylmethacrylate)
poly(lactic acid) [Chronopols 50,95, and 100] and copolymers such as poly(lactic acid-glycolic acid) copolymers [Lactel BP-400] and combinations with polystyrene, for example
cellulose acetate butyrate
poly(styrene)
hydroxybutyric acid-hydroxyvaleric acid copolymers [Biopol D400G]
styrene maleic anhydride copolymers [SMA 1440 A Resin, Sartomer Co.]
poly (methyl vinyl ether-maleic acid)
poly(caprolactone)
poly(n-amylmethacrylate)
wood rosin
polyanhydrides, e.g., poly(sebacic anhydride), poly(valeric anhydride), poly(trimethylene carbonate), etc., and copolymers such as poly(carboxyphenoxypropane-sebacid acid), poly(fumaric acid-sebacic acid), etc.
polyorthoesters
poly(cyanoacrylates)
poly(dioxanone)
ethyl cellulose
ethyl vinyl acetate polymers and copolymers
poly(ethylene glycol)
poly(vinylpyrrolidone)
acetylated mono-, di-, and trigylcerides
poly(phosphazene)
chlorinated natural rubber
vinyl polymers and copolymers
polyvinyl chloride
hydroxyalkylcelluloses
polybutadiene
polyurethane
vinylidene chloride polymers and copolymers
styrene-butadiene copolymers
styrene-acrylic copolymers
vinyl acetate polymers and copolymers (e.g., vinyl acetate-ethylene copolymers (Vinumuls) and vinyl acetate-vinylpyrrolidone copolymers
alkylvinylether polymers and copolymers
cellulose acetate phthalates
ethyl vinyl pthalates
cellulose triacetate
polyanhydrides
polyglutamates
polyhydroxy butyrates
acrylic polymers (Rhoplexes)
alkyl acrylate polymers and copolymers
aryl acrylate polymers and copolymers
aryl methacrylate polymers and copolymers
poly(caprolactams) (i.e., the nitrogen-containing counterparts to caprolactones)
epoxy/polyamine epoxy/polyamides
polyvinyl alcohol polymers and copolymers
silicones
polyesters (for oil-based approaches, including alkyds)
phenolics (polymers and copolymers with drying oils)

Preferred polymers include:
poly(methylmethacrylate)
poly(lactic acid) [Chronopols 50, 95, and 100] and combinations with polystyrene
poly(lactic acid-glycolic acid) copolymers [Lactel BP-400]
cellulose acetate butyrate
poly(styrene)
Poly(methylmethacrylate or poly(styrene maleic anhydride copolymer) are currently preferred for use with triazole fungicides such as tebuconazole, cyproconazole, and epoxiconazole, for example.

It is also contemplated that certain resins such as polyalkyd-resins, phenolic resins, abietic acid and epoxy resins would also be suitable for the practice of this invention. Also encompassed by the present invention are filled polymer and copolymer systems, i.e., using calcium carbonate, silica, clay, etc.

**Active Ingredients.** The microparticles of the present invention can include a single agriculturally active ingredient entrapped in a polymeric matrix or multiple active ingredients having similar or different activities (e.g., different biocides, such as fungicides and insecticides). Active ingredients in addition to the cyproconazole, epoxiconazole or tebuconazole active include, but are not limited to, any of various conventional biocides, including fungicides (e.g., triazoles, imidazoles, methoxyacrylates, fungicides in the morpholine series such as fenpropimorph, etc.), herbicides. (e.g., glyphosate, phosphinothricin, Triallate; Alachlor, etc.), insecticides (e.g., organophosphorus compounds, imidacloprid; pyrethroids, etc.), nematicides (e.g., Tribute), ascaricides, molluscicides, nematicides, rodenticides, bactericides, and termiticides; chemical hybridizing agents (e.g., Genesis); herbicide safeners; chemical inducers or elicitors (e.g., protein activators); plant growth regulators (e.g., auxins, cytokinins, gibberellins, etc.), elicitors, or nutrients such as fertilizers, minerals, etc.).

Among cyproconazole, epoxiconazole, triticonazole, and tebuconazole, cyproconazole is preferred. A complete discussion of the properties for each of these fungicides can be found in U.S. patent No. 4,664,696, EPA 196038, and U.S. patent 4,723,984 respectively.

Representative fungicides, herbicides, insecticides, and growth regulators that are useful in connection with the present invention are listed below:

| **Fungicides** | |
|---|---|
| Benomyl | Fludioxonil |
| Benzothiadiazoles | Flutolanil |
| Captan | Fosetyl-Al |
| Chlorothalonil | Kresoxim-Methyl |
| Cyproconazole | Mancozeb |
| Cyprodinil | Metalaxyl |
| Epoxiconazole | Prochloraz |
| Fenarimol | Triticonazole |
| Fenpropimorph | Tebuconazole |
| | Vinclozolin |

| **Herbicides** | |
|---|---|
| 2, 4-dichlorophenoxyacetic acid | Isoxaflutoie |
| Acetochlor | Lactofen |
| Alachlor | Mecoprop |
| Atrazine | Metolachlor |
| Bensulfide | Metribuzin |
| Bromacil | Norflurazon |
| Bromoxynil | Oxadiazon |
| Butachlor | Propachlor |
| Chlorsulfuron | Propanil |
| Clomazone | Quinclorac |
| Dicamba | Sethoxydim |
| Dinoseb | Sulcotrione |
| Diuron | Sulfentrazone |
| Doclofop methyl | Sulfosulfuron |
| Flumetsulam | Thiobencarb |
| Flumiclorac pentyl | Triallate |
| Glyphosate | Triclopyr |
| Halosulfuron | Trifluralin |
| Imazaquin | Vemolate |

| **Insecticides / Nematicides** | |
|---|---|
| Aldicarb | Fenvalerate |
| Azinphos-methyl | Imidachloprid |
| Carbaryl | Lindanc |
| Carbofuran | Malathion |
| Chlorpyrifos | Methyl Parathion |
| Cyfluthrin | Monocrotophos |
| Diazinon | Oftanol |
| Dicofol | Oxamyl |
| Disulfoton | Parathion |
| Endosulfan | Propoxur |
| Fenamiphos | Pyrethrins |

| **Growth Regulators** | |
|---|---|
| 6-Benzyladenine | Endothall |
| Alpha-Naphthylactic Acid | Ethepon |
| Ancymidol | Gibberellic Acid |
| Chlorpropham | Maleic Hydrazine |
| Daminozide | Paclobutrazol |

| **Chemical Hybridizing Agents** | |
|---|---|
| Clofenset (K⁺ salt) | |

In addition to active ingredients, the microparticles can also include one or more inactive ingredients such as solvents, dispersants, adjuvants, or plasticizers, and can be formulated as suspensions, granules, seed coatings, etc., together with other active or inactive ingredients.

**Release of Active Ingredient(s) from Microparticles.** Microparticles according to the present invention release an agriculturally active ingredient in a controlled fashion by diffusion (e.g., in the case of poly(methylmethacrylate or poly(styrene maleic anhydride copolymer) or by disintegration or dissolution of the matrix (e.g., in the case of polylactic, acid polymers), depending on the matrix polymer employed. Release rates also vary with the size of microparticles (affecting their surface area/volume ratio). The matrix material is selected to have properties conducive to the appropriate release and action of the agriculturally active ingredient in space and time. Formulations can also be prepared such that the active ingredient varies in concentration from the outer surface of the matrix microparticle to its core, providing 'programmed' rates and levels of active release over the duration of the seed germination and subsequent growth periods.

The rate of release of an active ingredient from a microparticle according to the present invention depends on the polymer, size of the microparticles, the loading of the active ingredient, and the dispersing agent used, if any. The manner in which an active ingredient is released from a microparticle depends on whether the loaded material is suspended or dissolved in the matrix. The steps involved when the active ingredient is dissolved in the matrix material are: diffusion of the active ingredient to the surface of the matrix; partition of the active ingredient between the matrix and the environment or elution medium (e.g., soil water, seed coat, or foliar surface); and transport away from the microparticle surface. In addition, if the active ingredient is dispersed (as macromolecular particles in microparticle), the active ingredient must dissolve into the matrix material before diffusion to the surface.

Another mode of release of the active ingredient is by biodegradation or erosion of the matrix material, the rate of which is influenced by the hydrophobicity or hydrophilicity of the polymer and the morphology of the microparticle, for example. In addition, the active ingredient can be released by swelling of the polymer matrix after imbibition of a liquid such as water. In diffusion-controlled systems the matrix is assumed to be unaffected by swelling, but in swelling-controlled systems the polymer matrix undergoes a transition from a glassy statute a gel state upon interaction with the penetrating solvent. The release rate is determined by the glass-to-gel transition process.

Another factor affecting release rate is osmotic pressure, which can be created inside the microparticle if the active ingredient or polymer has an affinity for water. The active ingredient is released when the osmotic pressure exceeds the maximum force that the matrix of the microparticle can tolerate.

Mathematical models for these release mechanisms are described in U. Pothakamury and G. Barbosa-Canovas, *Trends in Food Science & Technology* 6:397-406, 1995; and R. Langer and N. Peppas, *JMS-Rev. Macromol. Chem. Phys.* C(23):61-126, 1983.

**Formulations Including Microparticles.** Conventional inactive or inert ingredients can be incorporated into matrix microparticles or in various media, such as in aqueous media, used for producing suspensions and other formulations of matrix microparticles according to the present invention. Such inactive ingredients include but are not limited to: sticking agents; dispersing agents such as methylcellulose (Methocel® A15LV or Methocel® A15C, for example, serve as combined dispersant/sticking agents for use in seed treatments), polyvinyl alcohol (e.g., Elvanol® 51-05), lecithin (e.g., Yelkinol® P, and polymeric dispersants (e.g., PVP/VA S-630); thickeners (e.g., clay thickeners such as Van Gel ® B to improve viscosity and reduce settling of microparticle suspensions); emulsion stabilizers; surfactants; antifreeze compounds (e.g., urea); dyes; colorants; etc.

Any conventional active or inert material can be used for coating seeds with microparticles according to the present invention, such as conventional film-coating materials including but not limited to water-based film coating materials such as Sepiret and Opacoat.

The formulated product, when used as a suspension in an aqueous carrier, preferably comprises a dispersing agent to permit a relatively uniform or homogeneous mixture to form. The dispersing agent preferably also provides a degree of 'tackiness' or adhesiveness to the microparticle formulation in order for the formulation to adhere to treated seeds or other foliar surfaces. Suitable dispersing agents include but are not limited to aqueous 0.25-1.0% poly(vinyl alcohol), such as Elvanol® 51-05(DuPont) and Methocel® A15LV.

**Methods of producing matrix microparticles.** The matrix microparticles of the present invention can be produced by any process that results in a polymer matrix having active ingredients substantially uniformly distributed therein, including but not limited to solvent evaporation, solvent partition, hot melt microencapsulation, and spray drying.

A preferred process for entrapping the agriculturally active ingredient in accordance with the present invention includes the following steps:
(A) Preparation of a hydrophobic solution ("oil phase") including an active ingredient and a polymer in an organic solvent;
(B) Preparation of a hydrophilic solution ("aqueous phase") by dissolving a dispersing agent in water (or an aqueous or alcoholic solution);
(C) Forming an emulsion by combining the hydrophobic solution with the hydrophilic solution with stirring, homogenization, or sonication;
(D) Stirring the emulsion formed in (C) until all of the organic solvent of (A) has evaporated. The organic solvent can also be removed at reduced pressure using a rotary evaporator; and
(E) Optionally isolating the matrix microparticles by allowing the evaporated emulsion formed in (D) to settle, decanting the supernatant liquid from the matrix microparticles, then washing, filtering, and drying the microparticles in air. The microparticles can be resuspended in an aqueous carrier system comprising water and. for example, a dispersing agent, dye or colorant, etc., or the microparticles can be used without isolation.

Specifically, the matrix microparticle entrapment process is carried out by dissolving the agriculturally active ingredient and the polymer in a sufficient amount of organic solvent to form the hydrophobic solution. This dissolution is performed at room temperature or at temperatures not greater than 50°C with mechanical stirring. For microencapsulating active ingredients according to this general process, the active ingredient is preferentially soluble in the hydrophobic phase rather than in the hydrophilic phase, and is preferably substantially insoluble in the aqueous phase (by substantially insoluble is meant a solubility of less than 1% by weight in water at 25°C). A dispersing agent is then dissolved in sufficient deionized water to form the hydrophilic solution. This dissolution is performed at room temperature with mechanical stirring. The hydrophobic solution is then poured into the hydrophilic solution, while stirring. homogenizing, or sonicating the hydrophilic solution vigorously to form an emulsion, or by any other method conventionally used in the emulsification art. The emulsion consists of microdroplets from the hydrophobic solution that are uniformly dispersed and suspended in the hydrophilic solution. The droplet size and the final size of the matrix microparticle is controlled by shear rate and degree of agitation, the temperature, the volumetric ratio of the dispersed hydrophobic phase to continuous aqueous phase, and the type of dispersing agent used, if any. Stirring of the emulsion is continued until all of the organic solvent is evaporated. Once the organic solvent has evaporated, the supernatant liquid is decanted and the matrix microparticles are washed, filtered, and dried or used, preferably as is.

In the process outlined above, the organic solvent used to prepare the hydrophobic solution should be suitable for co-dissolving the required amounts of the active and polymer to form a hydrophobic (water-immiscible) solution. The organic solvent should not otherwise interact with or alter the intended functions of the active or polymer in the prepared matrix microparticles. The organic solvent should also have adequate volatility at room temperature (sufficiently low boiling point at ambient pressures) in order to evaporate at a reasonable rate from the emulsion. Methylene chloride is an example of an organic solvent suitable for the practice of this invention. Other suitable organic solvents include but are not limited to ethyl acetate, chloroform, and carbon tetrachloride. The amount of organic solvent used in forming the hydrophobic solution ranges from about two to about eight times, and preferably about three times, the weight of the polymer (or of the combined weight of the polymer and the active).

In general, no adjustment of the pH of the system is required during the matrix microparticle process to achieve satisfactory performance and production of entrapped material.

The currently preferred process for producing matrix microparticle of the present invention utilizes solvent evaporation. Briefly, the solvent evaporation technique involves mixing a hydrophobic liquid medium and a hydrophilic liquid medium to produce an emulsion. Emulsions can be made with a hydrophobic phase in a hydrophilic phase or a hydrophilic phase in a hydrophobic phase; the former is currently preferred. Moreover, it is preferred to produce an emulsion in which the volume of the hydrophilic phase is significant excess to the volume of the hydrophobic phase. An active ingredient is added that preferentially, dissolves in the hydrophobic phase, and preferably is substantially insoluble in the hydrophilic phase. The shear rate and time period for mixing the hydrophobic and hydrophilic phases is selected so as to produce uniformly dispersed hydrophobic droplets having average diameters in the range from 0.2 to 200 microns, preferably from 1 to 50 microns. The solvent is then evaporated from the hydrophobic phase, producing matrix microparticles of the present invention.

In the solvent partition technique (R. Langer *et al., Polymer* 31:547-555, 1990; *Kirk-Othmer Encyclopedia of Chemical Technology,* fourth edition, vol. 16, Curt Thies), an active ingredient is dissolved or dispersed in a volatile organic solvent. The resulting solution is suspended as a fine dispersion in an organic oil into which the organic solvent is extracted to produce microparticles. This technique can be carried out at room temperature and does not require water. As one example, a polymer is dissolved in methylene chloride, the required amount of an active ingredient (eg., a fungicide) is added, and the mixture is suspended in silicone oil containing a nonionic emulsifier such as Span 85 and additional methylene chloride. After adding the polymer solution to the silicone oil, petroleum ether is added and the mixture is stirred until the matrixed microparticles have hardened. The microparticles can be removed by filtration or centrifugation, washed with petroleum ether, and dried under vacuum.

In hot melt microencapsulation (E. Mathiowitz and R. Langer, *J. Contr. Rel.* 5:13-22, 1987; *Microcapsules and Nanoparticles in Medicine and Pharmacy,* ed. M. Donbrow, CRC Press, 1992, pp. 105-107), a polymer melt is mixed with the active ingredient, which can be suspended or dissolved therein. The resulting mixture is suspended in a nonmiscible solvent (for example, silicone oil or olive oil) that is heated about 5°C above the melting point of the polymer while stirring continuously. After an emulsion is formed and stabilized, it is cooled until the microparticles are solidified. After cooling, the microparticles are washed by decantation with petroleum ether to produce a free-flowing powder. In general, the resulting microparticles are less than about 50 microns in diameter.

**Application of matrix microparticles to soil, seed, or plant.** Controlled-release formulations according to the present invention can be applied to the soil, where it is released and eventually affects a target pest either directly or indirectly, for example, by first being taken up by a plant, a part of which is ingested by the pest.

Microparticle formulations can be applied by any conventional method, including but not limited to: (1) injection of a formulation (e.g., an aqueous suspension of microparticles) directly into the soil around seeds or in the root zone of developing plants (e.g., injection at a point 2 cm deep and within a 3 cm radius of the plant crown); (2) application as a soil drench (e.g., to the point at which the soil is at field capacity); (3) application as a foliar spray, preferably in a sufficient volume to thoroughly wet the foliage; and (4) application directly to seeds as a seed coating. Release of the active ingredient from the microparticles provides a desired biological effect in the zone of application or upon uptake of the active ingredient by the plant.

Matrix microparticles and formulations thereof can be applied to seed using any standard seed treatment methodology and coating material, for example, by mechanical application (for example, using a Hege 11 Liquid Seed Dresser), mixing in a container (e.g., a bottle or bag), etc.

Matrix microparticles of the present invention can be applied in combination with other active ingredients that are provided as fast- or slow-release formulations. Slow-release matrix microparticles according to the present invention can also be applied together with a fast-release formulation of the same or different active ingredients (or with microparticles comprising the same active ingredients) in order to achieve, for example, a chemical application regime with an initial high rate of release followed by a slower rate of release over a longer period of time.

### EXAMPLES

### EXAMPLE 1

3.72 g of cyproconazole (96.3% purity; Sandoz Agro. Ltd., Basel, Switzerland) and 14.3 g of polylactic acid (Chronopol® 95; Chronopol, Golden, CO) were dissolved in 156 g methylene chloride (Burdick & Jackson, Muskegon, MI) in a glass bottle with shaking to produce a hydrophobic solution.

7.5 g of polyvinyl alcohol (Elvanol® 51-05; DuPont, Wilmington, DE)) was dissolved with stirring in deionized water to produce 1500 g of hydrophilic solution.

The hydrophobic solution was added to the hydrophilic solution and the mixture was vigorously stirred to produce an emulsion. The stirring continued for one hour. Microscopic examination of the appearance and size of the oil droplets in the emulsion showed that the average size of oil droplets was in the 30-50 micrometer (micron, µ) range.

The emulsion was then transferred to a two liter (L) round bottom flank and attached to a rotary evaporator to remove the methylene chloride at a reduced pressure. The final methylene chloride residue was removed by heating the flask in a hot water bath at 40°C while on the evaporator.

The resulting microparticle suspension was filtered on a Buechner funnel to produce a filter cake, which was washed with three portions of deionized water to remove the last traces of aqueous filtrate. The filter cake was then air dried by spreading the product out on a sheet of clean paper.

An aqueous carrier solution was prepared by dissolving urea (Fischer Scientific, Pittsburgh, PA) and Methocel® A15LV (Dow Chemical Co., Midland, MI) in water by stirring. Urea was added as an anti-freeze and Methocel® A15LV as a combined dispersant and non-phytotoxic sticking agent for use in seed treatments. (A clay thickener such as Van Gel® B [R.T. Vanderbilt Co., Inc., Norwalk, CT) are optionally added to the aqueous carrier solution to improve viscosity and reduce settling.) The dry microcapsules were stirred into the aqueous carrier solution to produce a homogenous suspension.

The composition of the final formulation (NBP 5881024C) is shown below.

| **NBP 5881024C** | | | |
|---|---|---|---|
| **Ingredients** | **% w/w** | **Weight (g)** | **Active Ingredient** **("a.i.")** |
| Cyproconazole @ 19.88% | 17.72 | 37.32 | 7.42 g |
| Urea | 4.49 | 9.46 | |
| Methocel® A15LV | 0.05 | 1.05 | |
| Water, deionized | 77.29 | 162.79 | **% a.i. (w/w) = 3.52** |
| | 100.00% | 210.62 | **% polymer (w/w) = 14.2** |

### EXAMPLE 2

1.56 g cyproconazole (96.3% purity) and 13.44 g cellulose acetate butyrate polymer (Sigma Chemical Co., St. Louis, MO) were dissolved in 82.22 g methylene chloride in a glass bottle with shaking to produce a hydrophobic solution. 1.00 g of Methocel® A15LV and 20 of urea were dissolved in 64 g deionized water to prepare 85 g of a hydrophilic solution. The hydrophobic solution was added to the hydrophilic solution with stirring to produce an emulsion. The emulsion was stirred for 5 minutes to equilibrate. To reduce the particle size further, the emulsion was sonicated for 5.5 minutes with a sonic dismembrator (Model 550, Fischer Scientific, Pittsburgh, PA) using a variable power range. Cooling was provided by an ice bath to keep the temperature below 30°C. Microscopic examination showed particles mainly in the 4-5 micron range. The emulsion was transferred to a rotary evaporator and methylene chloride stripped off as described in Example 1. The resulting product was passed through a #325 mesh sieve to remove foreign particles and assayed for particle size, density (at room temperature), and % active ingredient.

The following were the properties of the matrix particles (NBP 5932858):

| **NBP 5932858 - Properties** | |
|---|---|
| % active ingredient (w/w) | 1.72 |
| Density, g/mL | 1.11 |
| Ave. particle size, p | 4.4 |

### EXAMPLE 3

Following the general procedure of Example 2, matrix microparticle suspensions having the compositions given below were produced. For NBP 5932866, methylene chloride was evaporated with stirring at atmospheric pressure. For NBP 5932869, NBP 5932889A, NBP 5932889B. and NBP 5932893, methylene chloride was evaporated with a rotary evaporator at reduced pressure. For NBP 5932893, Van Gel® B was added as part of the aqueous carrier medium. Poly(methylmethacrylate) (PMM) and polystyrene (50,000 MW) were obtained from Polysciences Inc. (Warrington, PA)

| | **%w/w** | | | | |
|---|---|---|---|---|---|
| **Ingredients** | **5932866** | **5932869** | **5932889 A** | **5932889 B** | **5932893** |
| Cyproconazole* | 1.50 | 1.50 | 3.00 | 3.00 | 3.00 |
| Chronopol® 95 | 13.50 | 13.50 | - | - | - |
| PMM | - | - | 6.00 | 12.00 | 6.00 |
| Polystyrene | - | - | 6.00 | - | 6.00 |
| Methocel® A15LV | 1.00 | 1.00 | 1.06 | 1.06 | - |
| Urea | 20.00 | 20.00 | - | - | - |
| Van Gel® B | - | - | - | - | 3.40 |
| Water | 64.00 | 64.00 | 83.94 | 83.94 | 81.60 |
| | 100.00% | 100.00% | 100.00% | 100.00% | 100.00% |

| | | | | | |
|---|---|---|---|---|---|
| * 100 % a.i. basis. Compensate for purity with polymer | | | | | |

The matrix microparticle suspensions had the following properties:

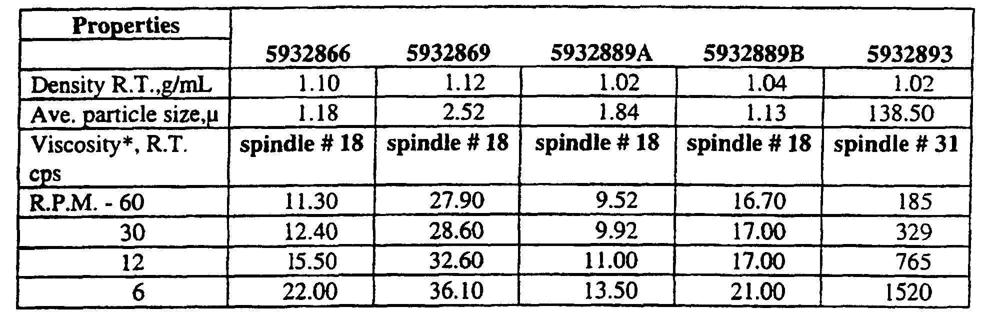

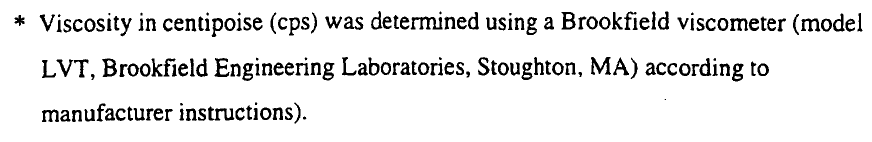

### EXAMPLE 4

Following the general procedure of Example 2, matrix microparticle suspensions having the compositions given below were produced:

| **Ingredients** | **% w/w** | | |
|---|---|---|---|
| | **NBP 5932889A** | **NBP 5932898** | **NBP 6061401** |
| Cyproconazole* | 3.00 | 3.00 | 3.00 |
| Chronopol® 95 | - | - | 6.00 |
| PMM | 6.00 | 6.00 | - |
| Polystyrene | 6.00 | 6.00 | 6.00 |
| Methocel® A15LV | 1.06 | 1.00 | 1.00 |
| Van Gel® B | - | 2.06 | 2.06 |
| Water | 83.94 | 81.94 | 83.94 |
| | 100.00% | 100.00% | 100.00% |

| | | | |
|---|---|---|---|
| * 100 % a.i. basis. Compensate for purity with polymer | | | |

The matrix microparticle suspensions were analyzed for the following properties:

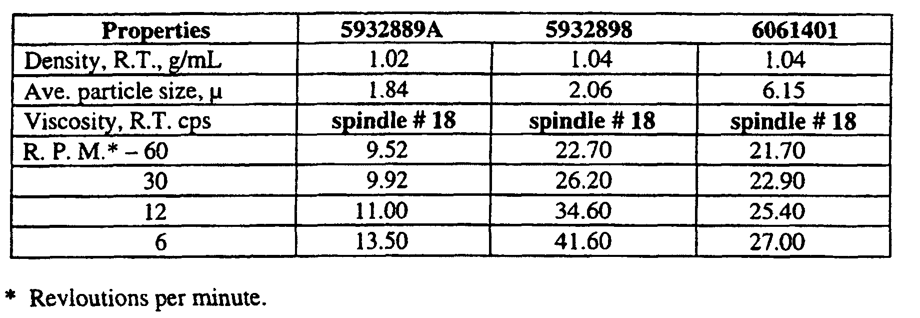

### EXAMPLE 5

Following the general procedure of Example 2, matrix microparticle suspensions having the compositions given below were produced. The hydrophilic and hydrophobic solutions were sonicated to produce an emulsion for preparation of NBP 593298 and homogenized with a Silverson L4R laboratory homogenizer (Silverson Machines, Inc., East Longmeadow, MA) to produce and emulsion for preparation of NBP 6061406 and NBP 6061409.

| **Ingredients** | **% w/w** | | |
|---|---|---|---|
| | **5932898** | **6061406** | **6061409** |
| Cyproconazole* | 3.00 | 3.00 | 3.00 |
| PMM | 6.00 | 6.00 | 6.00 |
| Polystyrene | 6.00 | 6.00 | 6.00 |
| Methocel® A 15LV | 1.00 | 1.00 | 1.00 |
| Van Gel B | 2.06 | 2.06 | 3.00 |
| Water | 81.94 | 81.94 | 81.00 |
| | 100.00% | 100.00% | 100.00% |

| | | | |
|---|---|---|---|
| * 100 % a.i. basis. Compensate for purity with polymer. | | | |

The matrix microparticle suspensions had the following properties:

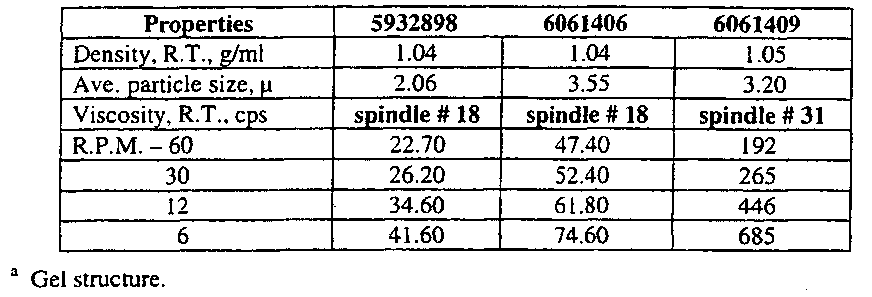

### EXAMPLE 6

Following the general procedure of Example 2, matrix microparticle suspensions having the compositions in the table below were produced. The hydrophilic and hydrophobic solutions were homogenized in a cooling bath in preparing NBP 6061413 and NBP 6061415, but not in preparing NBP 6061406 and NBP 6061411.

| **Ingredients** | **% w/w** | | | |
|---|---|---|---|---|
| | **6061406** | **6061411** | **6061413** | **6061415** |
| Cyproconazole* | 3.00 | 3.00 | 3.00 | 3.00 |
| PMM | 6.00 | 6.00 | 6.00 | 6.00 |
| Polystyrene | 6.00 | 6.00 | 6.00 | 6.00 |
| Methocel® A 15 C | - | 0.75 | 1.75 | 0.75 |
| Methocel® A15LV | 1.00 | - | - | - |
| Van Gel® B | 2.06 | - | - | - |
| Water | 81.94 | 84.25 | 83.25 | 84.25 |
| | 100.00% | 100.00% | 100.00% | 100.00% |

| | | | | |
|---|---|---|---|---|
| * 100 % a.i. basis. Compensate for purity with polymer | | | | |

The matrix microparticle suspensions were analyzed for the following properties:

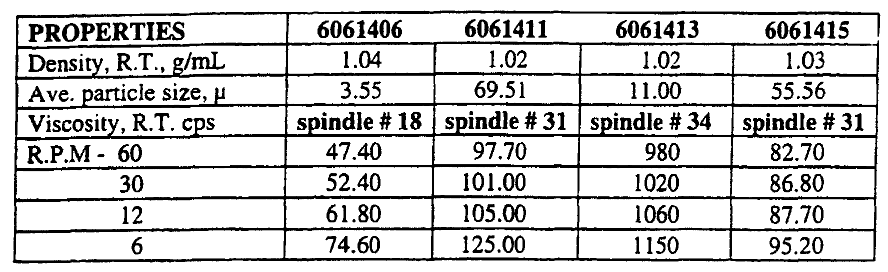

### EXAMPLE 7

Following the general procedure of Example 1, matrix microparticle suspensions having the compositions given below were produced. In the table below, runs designated (a) employed microparticle preparations that were not filtered, washed and dried after solvent evaporation, runs designated (b) employed microparticles that had been filtered, washed, and air dried as described in Example 1.

| **Ingredients** | **% w/w** | | | | |
|---|---|---|---|---|---|
| | (b) | (a) | (b) | (a) | (b) |
| | **MON 24682** | **NBP 6061422** | **NBP 6061426** | **NBP 6061430** | **NBP 6061436B** |
| Cyproconazole* | 3.52 | 3.52 | 3.52 | 3.52 | 3.52 |
| Polymer** | 14.22 (1) | 13.56 (2) | 13.62 (2) | 13.56 (3) | 14.70 (3) |
| Urea | 4.49 | 4.50 | 4.46 | 4.50 | 4.46 |
| Methocel® A15LV | 0.50 | 0.50 | 0.47 | 0.50 | 0.49 |
| Water | 77.29 | 77.92 | 77.93 | 77.92 | 76.83 |
| | 100.00% | 100.00% | 100.00% | 100.00% | 100.00% |

| | | | | | |
|---|---|---|---|---|---|
| * 100 % a.i. basis. Compensate for purity with polymer | | | | | |
| **(1) Chronopol® 95; (2) cellulose acetate butyrate; (3) poly (methyl methacrylate). | | | | | |

The matrix microparticle suspensions were analyzed for the following properties:

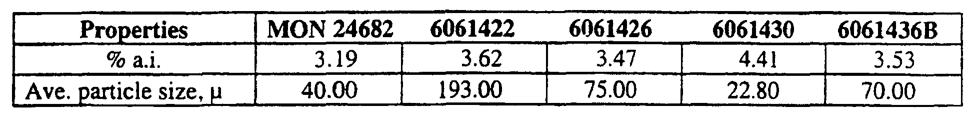

The formulations produced in this Example were applied to wheat as follows. Wheat seed was weighed out into 50 g batches for each treatment. Stock solutions were prepared by weighing out the formulation and adding deionized water to prepare stock solutions of the high rate for each formulation, then, dilutions were prepared from these stocks to provide various rates of application.

A Hege 11 laboratory scale rotostatic seed treater with a 200-gram small capacity seed treatment drum was used for the seed treatments.

For each treatment, a sample batch of seed was treated with the formulation or with the solvent alone to wet up/dirty the drum as recommended by the manufacturer. This seed sample was then discarded. The treatment was then drawn up into a syringe and slowly applied to a new 50 g batch of seed in the seed treater. As soon as the seed appeared dry (usually about 30-45 seconds), it was dumped into a 1 L plastic beaker. The seed was then transferred to a 4 oz. glass jar for storage. The lid of the jar was left off for several hours to ensure that the seed was totally dry. The treatments were applied in order from the lowest rate to the highest rate for each formulation. After the highest rate for each formulation, the seed treater was thoroughly scrubbed out with absolute ethanol on a paper tissue to prevent contamination of the next formulation. The syringe, funnel and beaker were also rinsed with ethanol. This procedure was repeated for each of the formulations that were tested.

At the end of all the treatments and/or when active ingredients were changed in the course of the same study, we also used an additional step of cleaning with a solution of soap in water and an additional ethanol wipe.

In order to assess the safety of the formulations, wheat seed that had been treated previously with test formulations was seeded in standard 4"-square pots containing sterilized Dupo silt loam soil. Seeding was done at a rate of 12-25 seeds per pot, with four replicate pots of each treatment rate. Seeds were covered with approximately 2 cm of the same soil and incubated under a 12-hour photoperiod, 50% relative humidity at 18°C. Eight to twelve days after planting (DAP), each replicate pot of each treatment was rated for the number of seedlings emerged and the average height of emerged seedlings was estimated. The main indicator of formulation performance was the measure of seedling height relative to untreated control plants (untreated = 100%).

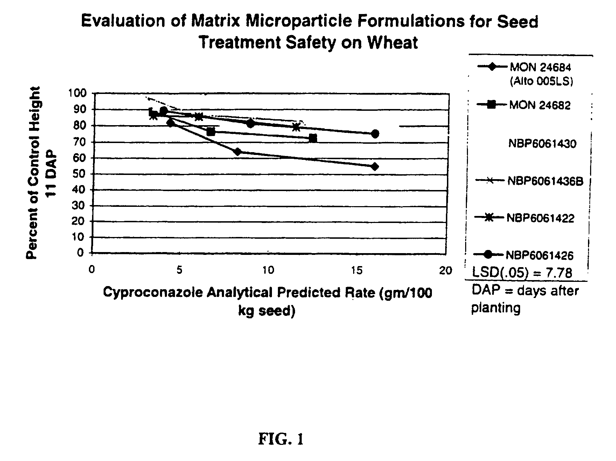

FIG. 1 shows the safety of these treatments, expressed as the height of germinating wheat at 11 days after planting (DAP) as a percent of the height of untreated controls. For comparison, Alto® 005LS (Sandoz Agro, Ltd., Basel. Switzerland) was included as a standard, fast-release non-matrix formulation liquid seed treatment of cyproconazole.

### EXAMPLE 8

Following the general procedure of Example 2, matrix microparticle suspensions having the following compositions were produced. Cellulose acetate butyrate was obtained from Sigma Chemical Co. (St. Louis, MO). SMA® 1440A resin, an ester/styrene maleic anhydride copolymer, was obtained from Sartomer Co. (West Chester, PA). Poly (methyl vinyl ether/maleic acid) was obtained from Sigma Chemical Co. (St. Louis, MO). Wood rosin was obtained from Westvaco (Charleston Heights, NC).

| Ingredients | % w/w | | | | |
|---|---|---|---|---|---|
| | NBP 59328 75A | NBP 59328 75B | NBP 59328 78A | NBP 59328 84 | NBP 59328 86 |
| Cyproconazole* | 1.50 | 1.50 | 1.50 | 1.50 | 1.50 |
| Cellulose acetate butyrate | 6.75 | - | - | 6.75 | - |
| SMA® 1440A Resin | 6.75 | 13.50 | - | - | - |
| Wood rosin | - | - | 13.50 | - | - |
| Poly (methyl vinyl ether/maleic acid) | - | - | - | 6.75 | - |
| PMM | - | - | - | - | 13.50 |
| Methocel® A 15C | 1.00 | 1.00 | 1.00 | 1.00 | 1 00 |
| Water | 84.00 | 84.00 | 84.00 | 84.00 | 84.00 |
| | 100.00 | 100.00 | 100.00 | 100.00 | 100.00 |

| | | | | | |
|---|---|---|---|---|---|
| * 100 % a.i. basis. Compensate for purity with polymer | | | | | |

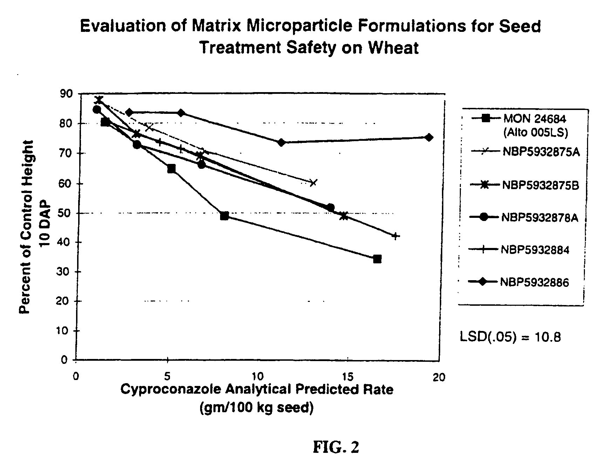

The suspensions produced in this Example were applied to wheat using the procedure set forth in Example 7. FIG. 2 shows the safety of these treatments at 10 days after planting as compared to Alto® 005LS.

### EXAMPLE 9

Following the general procedure of Example 1, matrix microparticle suspensions having the following compositions were produced. Lactel® BP-400 was obtained from Sigmal Chemical Co. (St. Louis, MO).

| **Ingredients** | **% w/w** | |
|---|---|---|
| | NBP 5932814A | NBP 932814B |
| Cyproconazole * | 3.0 | 3.0 |
| Lactel® BP-400 | - | 12.0 |
| Cellulose acetate butyrate | 12.0 | - |
| Methocel® A15LV | 1.0 | 1.0 |
| Water | 84.0 | 84.0 |
| | 100.0 | 100.0 |

| | | |
|---|---|---|
| * 100 % a.i. basis. Compensate for purity with polymer | | |

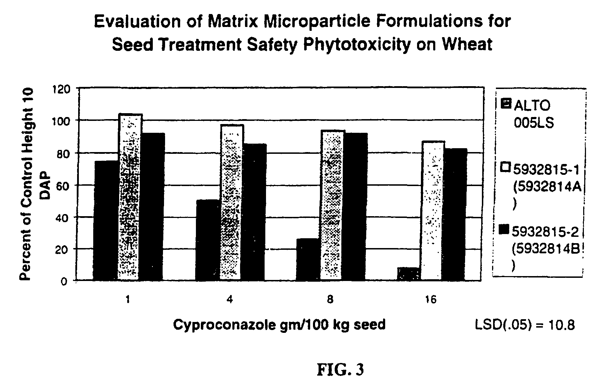

The suspensions produced in this Example were applied to wheat using the procedure set forth in Example 7. FIG. 3 shows the safety of these treatments at 10 days after planting as compared to Alto 005LS®.

### EXAMPLE 10

Following the general procedure of Example 1, matrix microparticle suspensions having the following compositions were produced.

| Ingredients | % w/w | |
|---|---|---|
| | 932801 A-2 (5932805-3) | 932801B-2 (5932805-3) |
| Cyproconazole * | 3.00 | 3.00 |
| Chronopol® 95 | 10.92 | 6.12 |
| Polystyrene | 1.20 | 6.00 |
| Methocel® A15LV | 1.56 | 1.61 |
| Water | 83.32 | 83.27 |
| | 100.00 | 100.00 |

| | | |
|---|---|---|
| * 100 % a.i. basis. Compensate for purity with polymer. | | |

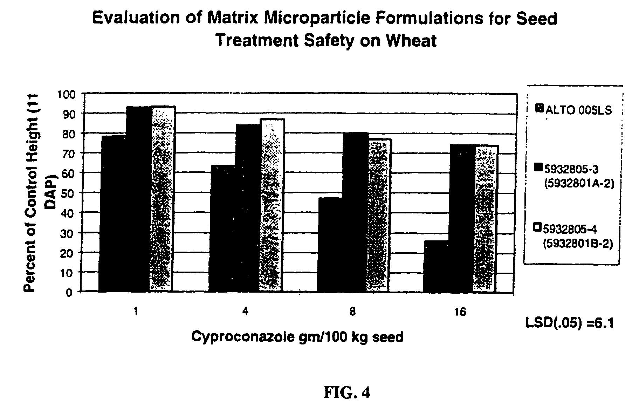

The suspensions produced in this Example were applied to wheat using the procedure set forth in Example 7. FIG. 4 shows the safety of these treatments at 11 days after planting as compared to Alto® 005LS.

### EXAMPLE 11

Following the general procedure of Example 1, matrix microparticle suspensions having the following compositions were produced.

| **Ingredients** | **% w/w** | |
|---|---|---|
| | 5881012C | 5890935G |
| Cyproconazole* | 20.1 | 3.04 |
| Chronopol® 95 | 79.9 | 10.41 |
| Methocel® A15LV | - | 1.27 |
| Water | - | 85.28 |
| | 100.0 | 100.0 |

| | | |
|---|---|---|
| * 100 % a.i. basis. Compensate for purity with polymer | | |

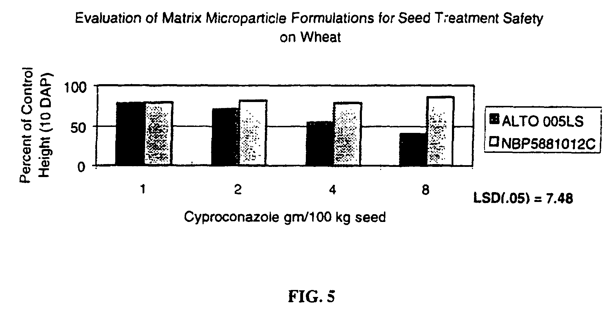

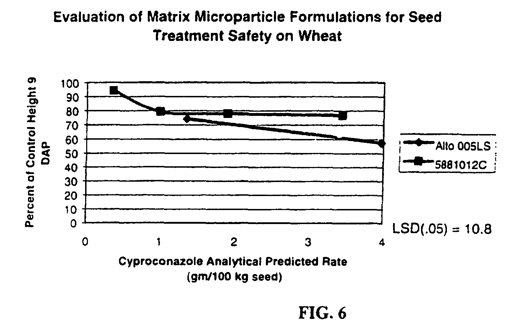

The suspensions produced in this Example were applied to wheat using the procedure set forth in Example 7. FIGS. 5 and 6 show the safety of NBP 5881012C at 10 days after planting and 9 days after planting, respectively, as compared to Alto® 005LS.

### EXAMPLE 12

Following the general procedure of Example 1, matrix microparticle suspensions having the following compositions were produced.

| **Ingredients** | **% w/w** | | |
|---|---|---|---|
| | 5881012C | 5890983A | 5890983B |
| Cyproconazole* | 20 | 22.3 | 30 |
| Chronopol® 95 | 80 | 77.7 | 70 |
| | 100 | 100.0 | 100 |

| | | | |
|---|---|---|---|
| * 100 % a.i. basis. Compensate for purity with polymer. | | | |

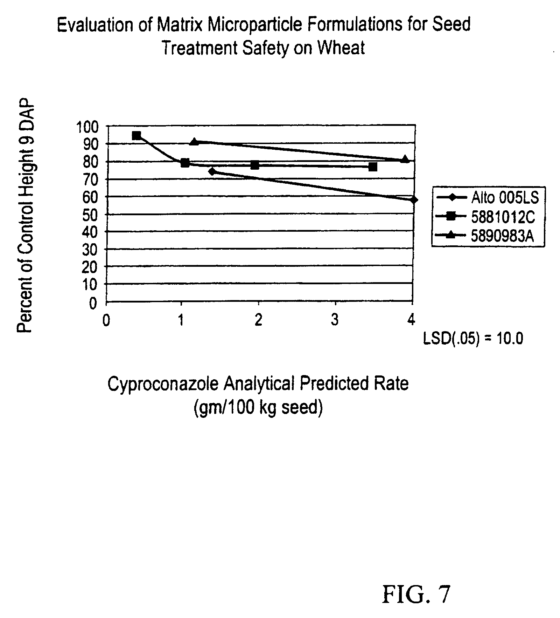

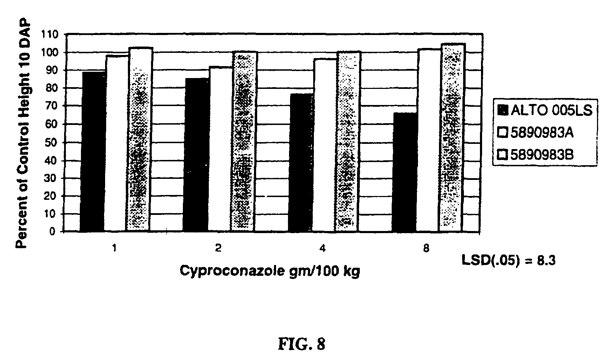

The suspensions produced in this Example were applied to wheat using the procedure set forth in Example 7. FIG. 7 shows the safety of NBP 5881012C and NBP 5890983A at 9 days after planting as compared to Alto® 005LS. FIG. 8 shows the safety of NBP 5890983A and NBP 5890983B at 10 days after planting as compared to Alto® 005LS.

### EXAMPLE 13

Following the general procedure of Example 1 and using the ingredients which are listed below matrix microparticle suspensions having the following compositions were produced. Biopol® D400G was obtained from Monsanto Company (St. Louis, MO). Polyvinylpyrollidone/vinyl acetate copolymer (PVPNA S-630), which was used as a dispersant, was obtained from GAF Chemicals Corp. (Wayne, NJ).

| **Ingredients** | **% w/w** | | |
|---|---|---|---|
| | 5890983C | 5890983D | 5890977D |
| Cyproconazole* | 10 | 22.3 | 22.3 |
| Biopol D400G | - | 77.7 | - |
| Chronopol® 95 + inerts | 90 | - | 77.7** |
| | 100 | 100.0 | 100.0 |

| | | | |
|---|---|---|---|
| * 100% a.i. basis. Compensate for purity with polymer and inerts. | | | |

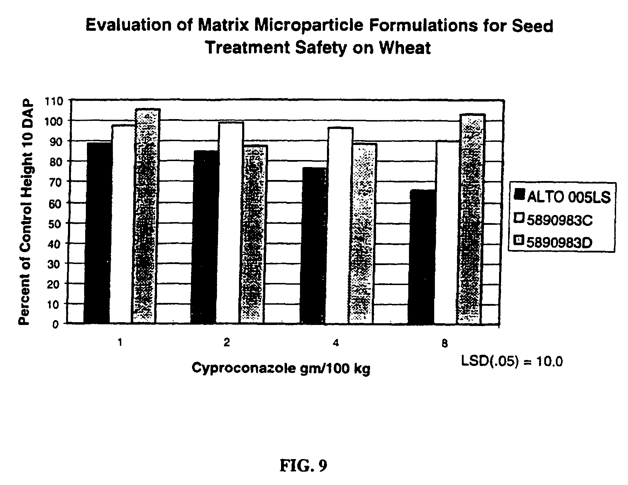

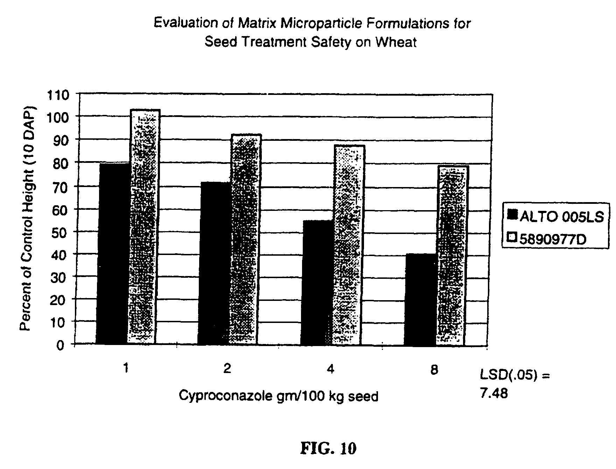

The suspensions produced in this Example were applied to wheat using the procedure set forth in Example 7. FIG. 9 shows the safety of NBP 5890983C and NBP 5890983D at 10 days after planting as compared to Alto® 005LS. FIG. 10 shows the safety of NBP 5890977D at 10 days after planting as compared to Alto® 005LS.

### EXAMPLE 14

Following the general procedure of Example 1 matrix microparticle suspensions having the following compositions were produced.

| **Ingredients** | **% w/w** | | |
|---|---|---|---|
| | 5881009B | 5890935D | 5890935E |
| Cyproconazole | *3.17 | *3.01 | *3.01 |
| Elvanol® 51-05 | 1.64 | 1.26 | 1.26 |
| Methocel® A15LV | - | - | - |
| Chronopol® 50 | 11.06 | - | - |
| Chronopol® 95 | - | 10.43 | - |
| Chronopol® 100 | - | - | 10.43 |
| Water | 84.13 | 85.30 | 85.30 |
| | 100.00 | 100.00 | 100.00 |

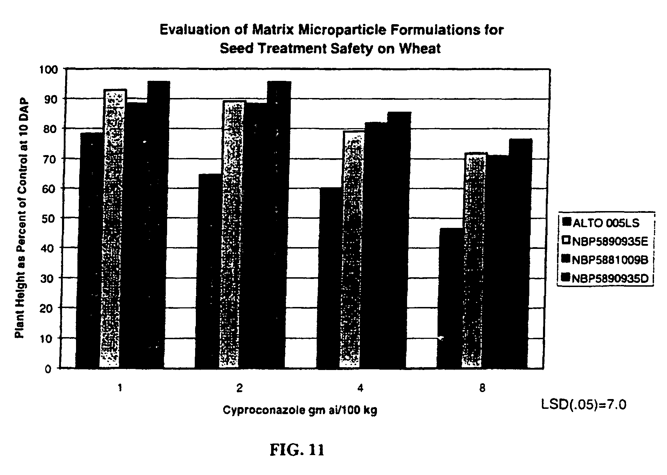

The suspensions produced in this Example were applied to wheat using the procedure set forth in Example 7. FIG. 11 shows the safety of these suspensions at 10 days after planting as compared to Alto® 005LS.

### EXAMPLE 15

Following the general procedure of Example 1 and using the ingredients which are listed below matrix microparticle suspensions having the following compositions were produced.

| Ingredients | % w/w | | |
|---|---|---|---|
| | 5890935F | 5890935G | 5890935H |
| Cyproconazole | *3.05 | *3.04 | *3.04 |
| Elvanol® 51-OS | - | - | |
| Methocel® A15LV | 1.25 | 1.27 | 1.27 |
| Chronopol® 50 | 10.40 | | |
| Chronopol® 95 | - | 10.41 | |
| Chronopol® 100 | - | - | 10.41 |
| Water | 85.30 | 85.28 | 85.28 |
| | 100.00 | .100.00 | 100.00 |

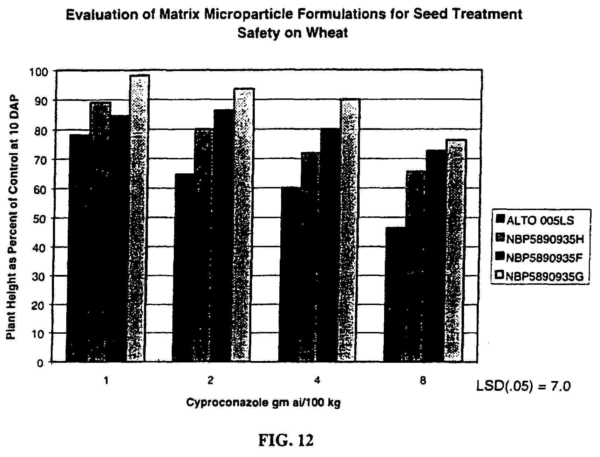

The suspensions produced in this Example were applied to wheat using the procedure set forth in Example 7. FIG. 12 shows the safety of these compounds at 10 days after planting as compared to Alto® 005LS.

### EXAMPLE 16

Following the general procedure of Example 2 matrix microparticle suspensions having the following compositions were produced. Lucite® #29 was obtained from Polysciences Inc. (Warrington, PA).

| **Ingredients** | **%, w/w** | |
|---|---|---|
| | **5932844A(1)** | **5932839A** |
| Cyproconazole | 2.95* | 1.48* |
| Lucite® #29 | 11.80 | - |
| Cellulose acetate butyrate | - | 13.27 |
| Methocel® A15LV | 1.00 | 1.00 |
| Water | 84.25 | 84.25 |
| | 100.00 | 100.00 |

| | | |
|---|---|---|
| * 100 % a.i. basis. Compensate for purity with polymer. | | |

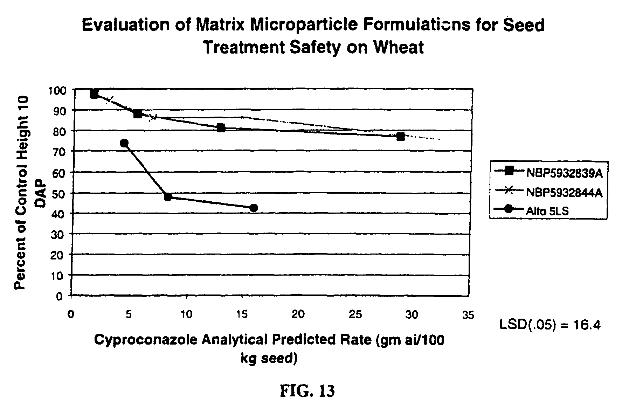

The suspensions produced in this Example were applied to wheat using the procedure set forth in Example 7. FIG. 13 shows the safety of these compounds at 10 days after planting as compared to Alto® 005LS.

### EXAMPLE 17

Following the general procedure of Example 2, a matrix microparticle suspension having the following composition and properties was produced. Tebuconazole was obtained from Bayer (Leverkusen, Germany).

| **Ingredients (MON 38410)** | **% w/w** |
|---|---|
| Tebuconazole | *3.52 |
| Chronopol® 95 | 14.35 |
| Urea | 4.49 |
| Methocel® A15LV | 0.50 |
| Water | 77.14 |
| | 100.0 |

| | |
|---|---|
| *100% a.i. basis. Compensate for purity with polymer. | |

| **Property** | |
|---|---|
| % Tebuconazole | 3.37 |
| Density, g/cc, 24 °C | 1.05 |
| Mean particle size, i | 41 |

### EXAMPLE 18

Following the general procedure of Example 1 a matrix microparticle suspension having the following composition and properties was produced.

| **Ingredients (MON 38411)** | **% w/w** |
|---|---|
| Tebuconazole | *2.95 |
| Lucite® # 29 | 11.80 |
| Methocel® A 15LV | 1.00 |
| Water | 84.25 |
| | 100.0 |

| | |
|---|---|
| * 100% a.i. basis. Compensate for purity with polymer. | |

| **Property** | |
|---|---|
| % Tebuconazole | 3.34 |
| Density, g/cc, 24°C | 1.03 |
| Particle Size, microns, mean | 1.9 |

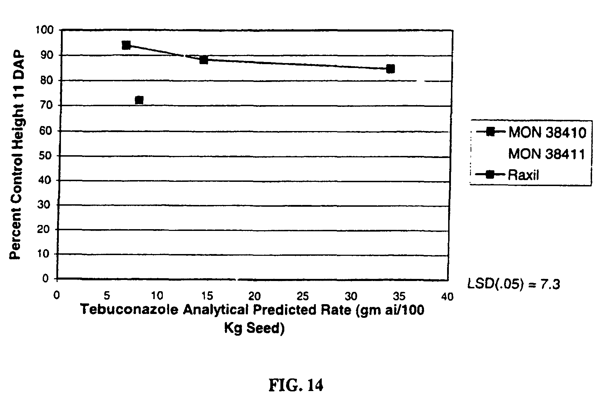

MON 38410 and MON 38411 were applied to wheat using the procedure set forth in Example 7. FIG. 14 shows the safety of these compounds at 10 days after planting as compared to Raxil® (Bayer, Leverkusen, Germany), a commercial fast-release formulation of tebuconazole.

### EXAMPLE 19

Following the general procedure of Example 2 a matrix microparticle suspension having the following composition and properties was produced.

| **Ingredients (MON 24530)** | **% w/w** |
|---|---|
| Epoxiconazole | *2.95 |
| Chronopol® 95 | 11.80 |
| Methocel® A15LV | 1.00 |
| Water | 84.25 |
| | 100.00 |

| | |
|---|---|
| *100% a.i. basis. Compensate for purity with polymer. | |

| **Property** | |
|---|---|
| % Epoxiconazole | 3.01 |
| Density, g/cc, 24 °C. | 1.04 |
| Ave. particle size, µ | 2.80 |

### EXAMPLE 20

Following the general procedure of Example 2 a matrix microparticle suspension having the following composition and properties was produced.

| **Ingredients (MON 24540)** | **% w/w** |
|---|---|
| Epoxiconazole | *2.95 |
| Lucite® # 29 | 1 1.80 |
| Methocel® A15LV | 1.00 |
| Water | 84.25 |
| | 100.00 |

| | |
|---|---|
| * 100% a.i. basis. Compensate for purity with polymer. | |

| **Property** | |
|---|---|
| %Epoxiconazole | 3.18 |
| Density, g/cc, 24°C | - |
| Particle Size, microns, mean | - |

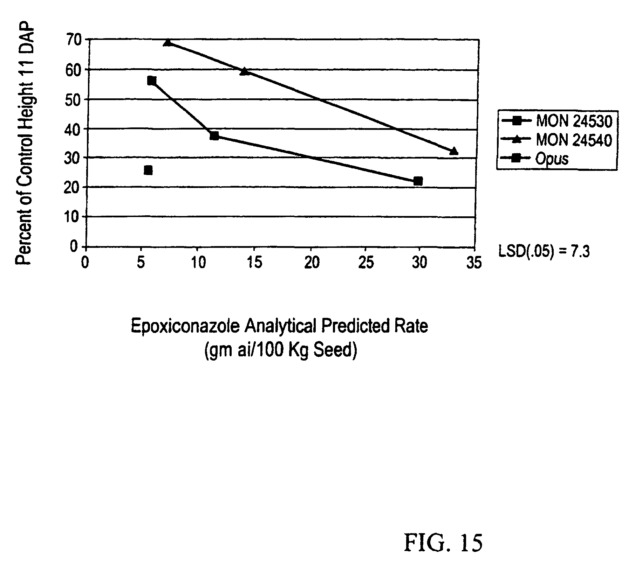

The MON 38410 and MON 38411 suspensions were applied to wheat using the procedure set forth in Example 7. FIG. 15 shows the effects of these suspensions were compared with the effect of Opus® (BASF AG, Limburgerhof, Germany), a commercial fast-release formulation of epoxiconazole. The maximum safe rate of application of Opus as a seed treatment is approximately 1 g / 100 kg seed.

### EXAMPLE 21

Wheat seeds were coated with an aqueous suspension of the matrix microparticles of the present invention using the following procedure.

The following water-based film coating concentrates were used for the film coating of seeds: Blue Opacoat-AG (Colorcon, West Point, PA), Sepiret 8127 Rouge (Seppic, Paris, France), and Sepiret 2020 A Rouge (Seppie, Paris, France). Sepiret and Opacoat formulas are ready-to-use colored film-forming compositions designed for the application of thin films of biodegradable polymers, usually cellulose derivatives of natural origin.

A batch film coating system (Coating Machinery Systems [CMS] PSC-5, Ames, IA) was used to apply a precision coating to specific amounts of seed. The water-based film coating concentrates were usually diluted to a 15% w/w solids concentration with water before application. Microparticle formulations were usually diluted to an active ingredient concentration of 0.12% w/w and coated on seed as a separate coating (using the procedure of Example 7) or in combination with the water-based film coatings. Drying temperatures were usually inlet/outlet at 100°F / 90°F with air flows at 300 cubic feet per minute (CFM). Added coating weights were usually calculated at about 2% w/w. which provides for uniform coverage. After coating, the individual coated batches of seed were analyzed for cyproconazole content ("found a.i.").

| **Formulation.** | **5890993** | **5890996 C** | **5932801 A2** | **5932801 B2** |
|---|---|---|---|---|
| **Treatment:** | **5932805-1** | **5932805-2** | **5932805-3** | **5932805-4** |
| Wheat seed | Q.S. | Q.S. | Q.S. | Q.S. |
| Cyproconazole @ 100% (ppm) | 176, 88, 44, 11 | 176, 88, 44, 11 | 176, 88, 44, 11 | 176, 88, 44, 11 |
| Found a.i. (ppm) | 139, 63, 29, - | 120, 50, 18, - | | |

| **Formulation:** | **5872190** | **Alto 005LS** | |
|---|---|---|---|
| **Treatment:** | **5932806-1** | | |
| Wheat seed | Q.S. | Q.S. | Q.S. |
| Cyproconazole @ 100% | 176, 88, 44, 11 ppm | 176, 88, 44, 22, 11 ppm | 176, 88, 44, 22,11 ppm |
| Found a.i., ppm (2) | 156, 77, 36, - | 127, 71, 32, 16,8 | 129, 52, 27, 14,- |
| Q.S. = Quantity Sufficient to dilute to the required concentration. | | | |

| **Formulation:** | **5881012C** | **5881012C** | **581012C** | **5890996B** |
|---|---|---|---|---|
| **Treatment:** | **5932803-1** | **5932803-2** | **5932803-3** | **5932803-4** |
| Wheat seed | Q.S. | Q.S. | Q.S. | Q.S. |
| Methocel® A15LV | 110 ppm | - | | 100 ppm |
| Urea | - | 890 ppm | - | - |
| Ammonium Sulfate | - | - | 890 ppm | |
| Cyproconazole @ 100% (ppm) | 88, 44, 22, 11 | 88, 44, 22, 11 | 88, 44, 22, 11 | 88,44, 22. 11 |
| Found a.i., ppm (1) | 43, 25, 15, - | | | 51, 17, 10,- |

| **Formulation:** | **5890935G** |
|---|---|
| **Treatment:** | **5932803-5** |
| Wheat seed | Q.S. |
| Methocel® A15LV | - |
| Cyproconazole @ 100% (ppm) | 88, 44, 22, 11 |
| Found a.i., ppm (1) | 33, 25, 9, - |

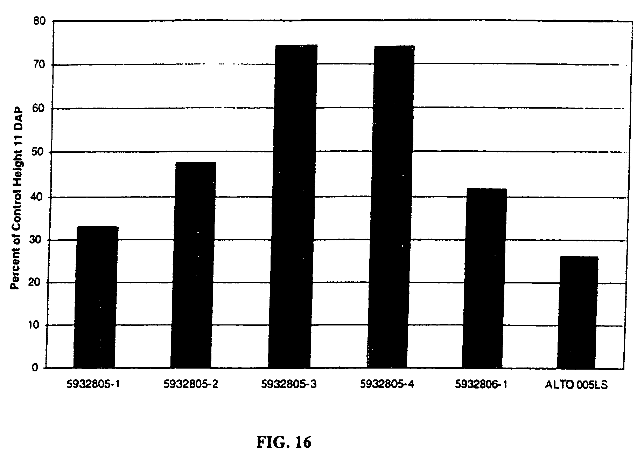

FIG. 16 shows the safety of the suspensions at an application rate of 16 g active ingredient per 100 kg seed, as compared with Alto® 005LS. Differences in safety between the matrix microparticle formulations at lower application rates were less pronounced.

### EXAMPLE 22

In this example, the polymers used were poly(methyl methacrylate) (350,000 MW, Polysciences, Inc., Warrington, PA) or poly(styrene/maleic anhydride) (75% styrene, Sigma Chemical Co., St. Louis, MO). The organic solvent was methylene chloride (American Chemical Society analytical reagent grade). Dispersing agents used were Methocel A15LV (methyl cellulose, Dow Chemical, Midland, MI); Elvanol 51-05 (polyvinyl alcohol, DuPont, Wilmington, DE); or Yelkinol P (lecithin, Archer Daniels Midland Company, Decatur IL). Active ingredients used were epoxiconazole (technical grade @ 96.2 %, BASF) or tebuconazole (technical grade @ 98.6 %, Bayer).

All formulations were prepared by an oil-in-water (O/W) emulsion/solvent evaporation procedure. Briefly, the polymer and active ingredient were dissolved in methylene chloride at room temperature to form a hydrophobic solution (15 % solids). The hydrophobic (oil, O) phase was added to a cooled (<5 °C) 0.5 - 3.0% aqueous dispersant solution (water, W) and sheared with a Silverson Model L4R homogenizer (large hole screen, 1.5 cm.) for 5 minutes at setting #5 to form an emulsion. The organic solvent was then evaporated with stirring at ambient temperatures in a fume hood. The resulting microparticle preparations were normally passed through a # 60 mesh sieve to remove large particles. These microparticles were examined microscopically with a Leitz Dialux 20EB microscope to check for crystals and microparticle morphology, and evaluated using a Coulter LS-130 particle size analyzer to determine average particle size and the number of modes in the distribution.

To assay the rate of release of active ingredient from microparticle formulations, an aliquot of a formulation was placed in a glass bottle at a concentration at which a released active ingredient was expected to be < ½ the water solubility level. A solvent was then added (water or 10 % acetone). At various intervals, the bottle was shaken (200 times at time 0, 20 times for other intervals). An aliquot was removed, centrifuged 15 minutes at 2700 rpm, and filtered through a 0.45 micron PTFE filter (after discarding the first 2 mL). Assays for epoxiconazole and tebuconazole were then carried out by HPLC.

Microparticle suspensions having the following compositions were produced.

| **Epoxiconazole-Containing Matrix Microparticle Formulations -** **Composition (%, w/w)** | | | |
|---|---|---|---|
| **Ingredients** | **6239153A** | **6239162** | **6151653C** |
| Epoxiconazole (100% a.i. basis) | 3.00 | 3.00 | 3.00 |
| Polymer | 27.00 (a) | 12.00 (b) | 12.00 (b) |
| Methocel® A15LV | - | - | 2.00 |
| Elvanol® 51-05 | 4.00 | - | - |
| Yelkinol® P | - | 1.50 | - |
| Water | 83.50 | 83.50 | 83.00 |
| | $\overline{\text{100.00}}$ | $\overline{\text{100.00}}$ | $\overline{\text{100.00}}$ |

| **Evaluation Data** | | | |
|---|---|---|---|
| Loading of a.i. (% w/w) | 10 % | 20 % | 20 % |
| O/W ratio in emulsion | 1/5 | 3/2 | 3/2 |
| Ave. particle size, mode: | 11.35 µ, trimodal | 1.37 µ, bimodal | 3.04 µ, bimodal |
| Init. % a.i. / % REA* | 3.57/0.18 | 3.44/1.00 | 3.94/0.2 |
| Polymers: (a) Poly(methylmethacrylate), (b) Poly(styrene/maleic anhydride) | | | |

| | | | |
|---|---|---|---|
| * REA = Readily Extractable Active. | | | |

| **Tebuconazole-Containing Matrix Microparticle Formulations -** **Composition (%, w/w)** | | | |
|---|---|---|---|
| **Ingredients** | **6248014A** | **6248014B** | **6248014C** |
| Tebuconazole (100 % a.i. basis) | 3.00 | 4.50 | 6.00 |
| Polymer* | 12.00 (a) | 10.50 (a) | 9.00 (a) |
| Methocel® A15LV | 1.00 | 1.00 | 1.00 |
| Water | 84.00 | 84.00 | 84.00 |
| | $\overline{\text{100.00}}$ | $\overline{\text{100.00}}$ | $\overline{\text{100.00}}$ |

| **Evaluation Data** | | | |
|---|---|---|---|
| Loading of a.i., % | 20 | 30 | 40 |
| O/W Ratio in emulsion | 3/2 | 3/2 | 3/2 |
| Ave. particle size,, mode: | 9.14 µ, bimodal | 7.36 p, bimodal | 13.48 p, triimodal |
| Init. % a.i. / % REA: | 3.25/0.68 | 4.92/2.01 | 5.75/2.21 |

| | | | |
|---|---|---|---|
| * (a) Poly(methylmethacrylate), (b) Poly(styrene/maleic anhydride) | | | |

In addition, phytotoxicity of the formulations on wheat and their release rates into water and into 10% acetone solutions were determined. This information is summarized below.

| **Epoxiconazole-Containing Matrix Microparticle Formulations -** **Phytotoxicity and Release Rates** | | | |
|---|---|---|---|
| Formulation | **6239153A** | **6239162** | **6151653C** |
| % Release, 269 hrs: | | | |
| - Water: | 0.9 | 6.56 | 1.63 |
| - 10 % Acetone: | 9.71 | 46.7 | 26.6 |
| | | | |
| Safety on Wheat* | | | |
| - 25 g/100 kg seed | 96.9% (25.4 g) | 66.4% (12.4 g) | 92.2% (28.6 g) |
| - 50 g/100 kg seed | 91.8% (46.4 g) | 20.0% (42.2 g) | 75.4% (53.3 g) |
| Opus®, 8 g/ 100 kg | 22.5% (6.4 g) | | |
| Control (0 g/100 kg) | 100% (0g) | | |

| | | | |
|---|---|---|---|
| * Plant height as a % of the height of untreated control plants. Numbers in parenthesis are the grams of active ingredient found by assay to be on 100 kg of treated seed. | | | |

| **Tebuconazole-Containing Matrix Microparticle Formulations -** **Phytotoxicity and Release Rates** | | | |
|---|---|---|---|
| Formulation | **6248014A** | **6248014B** | **6248014C** |
| % Release, 269 hrs: | | | |
| - Water: | 2.53 | 3.79 | 14.5 |
| - 10 % Acetone: | 24.9 | 46.2 | 60.0 |
| | | | |
| Safety on Wheat* | | | |
| - 50 g/100 kg seed | 89.7% (47 g) | 78.4% (45 g) | 70.3% (49 g) |
| - 75 g/100 kg seed | 83.8% (70 g) | 77.3% (72 g) | 68.7% (78 g) |
| - 100 g/100 kg seed | 78.4% (95 g) | 74.1% (92 g) | 60.8% (99 g) |
| Raxil®, 25 g/100 kg | 40.3% (26 g) | | |
| Control (0 g/100 kg) | 100% (0 g) | | |

| | | | |
|---|---|---|---|
| * % of height of untreated control. Numbers in parenthesis are the grams of active ingredient found by assay to be on 100 kg of treated seed. | | | |

Microparticles having the same polymer and active ingredient loading (6239162 versus 6151653C) but using a different dispersant have much different release rates and corresponding differences in safety on wheat. The high release rate and higher initial % REA of 6239162 gives a product having poor safety on wheat. However the same loading in the same polymer processed with a different dispersant gives a recipe with a lower release rate and readily extractable active (REA) and higher safety on wheat. In addition, the rates of release of active ingredients are higher (and safety on wheat decreases correspondingly) as the loading in the microparticle is increased.

This study indicates that release rates can be changed by processing and active ingredient loading (concentration) in the matrixed microparticle. As active ingredient concentration increases, release rates increase likewise. Lower release rates tend to result in higher safety on wheat. When different dispersing agents are used for the preparation of emulsions, the emulsion quality and the release rate of the resulting microparticles are affected.

Poly(methylmethacrylate) and poly(styrene-maleic anhydride) are useful polymers for producing microparticles that increase the safety of epoxiconazole and tebuconazole on wheat.

### Example 23

Polymers used were poly(methyl methacrylate) (350,000 MW, Polysciences. Inc.. Warrington, PA) and poly(styrene/maleic anhydride) (75% styrene, Sigma Chemical Co., St. Louis. MO) were used. All organic solvents were of American Chemical Society (A.C.S.) analytical reagent grade. Dispersing agents used were Methocel® A15LV (Dow Chemical, Midland. MI) and Elvanol 51-05 (polyvinyl alcohol, DuPont, Wilmington. DE).

Microparticles were prepared by an oil-in-water (O/W) emulsion/solvent evaporation procedure. Briefly, the polymer and active ingredient used were dissolved in methylene chloride at room temperature to form a 15 % solids hydrophobic solution (oil phase, O). This oil phase was added to a cooled (<5 °C) 0.5 - 3.0% aqueous dispersant solution (aqueous solution, W) and sheared with a Silverson Model L4R homogenizer (large hole screen. 1.5 cm.) for 5 minutes at setting #3 to form an emulsion. The solvent was then evaporated with stirring at ambient temperatures in a fume hood. Assays for active ingredient concentration were made and further evaporation of water was carried out to give the calculated final concentration. The resulting microparticles were passed through a # 60 mesh sieve to remove large particles and then evaluated. Several evaluations were made, including microscopic examination with a Leitz Dialux 20EB microscope, pH, density, viscosity, and particle size distribution by Coulter LS-130 particle size analyzer.

Seed treatment formulations, their physical properties, and phytotoxicity data from greenhouse trials are described below. The dispersant used for all of the formulations was Methocel® A15LV, with the exception of MON 24531. This formulation showed better processing with Elvanol® 51-05 as a dispersant.

| **Seed Treatment Formulations** | | | | | | | |
|---|---|---|---|---|---|---|---|
| **% (w/w) Ingredients** | **MON 24531** | **MON 24532** | **MON 24533** | **MON 24534** | **MON 38413** | **MON 38414** | **MON 38415** |
| Epoxiconazole | 3.00* | 3.00* | 3.00* | 3.00* | - | - | - |
| Tebuconazole | - | - | - | - | 10.00* | 10.00* | 10.00* |
| Polymer | 27.00(1) | 12.00(2) | 27.00(2) | 12.00(1) | | | |
| | | | | | 40.00(2) | 15.00(2) | 40.00(1) |
| Meth. Cellulose | - | 1.86 | 1.00 | 1.50 | 1.40 | 1.70 | 1.40 |
| Polyvinyl | 3.85 | - | - | - | - | - | - |
| Alc. | | | | | | | |
| Water | 66.15 | 83.14 | 69.00 | 83.50 | 48.60 | 73.30 | 48.60 |
| | $\overline{\text{100.00}}$ | $\overline{\text{100.00}}$ | $\overline{\text{100.00}}$ | $\overline{\text{100.00}}$ | $\overline{\text{100.00}}$ | $\overline{\text{100.00}}$ | $\overline{\text{100.00}}$ |

| | | | | | | | |
|---|---|---|---|---|---|---|---|
| * 100 % a.i. basis. | | | | | | | |
| Polymers: (1) poly(methylmethacrylate); | | | | | | | |
| (2), poly(styrene-maleic anhydride) copolymer 75:25 ratio. | | | | | | | |

The table below provides information regarding physical properties of the microparticle preparations.

| **Physical Properties** | | | | | | | |
|---|---|---|---|---|---|---|---|
| **CER-9802-Property** | **8638-F MON 24531** | **8637-F MON 24532** | **8640-F MON 24533** | **8652-F MON 24534** | **8651.F MON 38413** | **8641-F MON 38414** | **8644-F MON 38415** |
| % a.i. | 2.94 | 3.01 | 2.96 | 2.93 | 9.39 | 10.13 | 9.89 |
| % REA | 0.27 | 0.19 | 0.03 | 0.55 | 0.08 | 1.19 | 0.24 |
| | | | | | | | |
| t° (C.) when measured | 23.7 | 23.7 | 24.2 | 23.0 | 23.3 | 23.2 | 22.9 |
| Density, g/cc | 1.07 | 1.03 | 1.05 | 1.03 | 1.08 | 1.05 | 1.10 |
| Viscosity, 60rpm, cps | 3.61 | 2.04 | 3.34 | 1.97 | 19.0 | 4.46 | 25.9 |
| pH ù | 7.07 | 4.02 | 3.36 | 6.82 | 3.31 | 3.77 | 6.25 |

| **Phytotoxicity of Tebuconazole-Containing Formulations** **[% of Control Height]** | | | | | | |
|---|---|---|---|---|---|---|
| **CER-9802-g a.i./ 100 kg seed** | **-F MON 38413** | **-F MON 38414** | **-F MON 38415** | **-F MON 38416** | **Ref MON 38412** | **Ref. RAXIL** |
| 16 | - | - | - | - | - | 76.3 |
| 25 | - | - | - | - | 95.5 | - |
| 50 | 82.1 | 69.8 | 89.7 | 70.3 | 89.6 | - |
| 75 | 84.5 | 64.4 | 83.8 | 68.7 | - | - |
| 100 | - | - | 78.4 | 60.8 | - | - |
| LSD(.05) = 19.14 | | | | | | |

| **Phytotoxicity of Epoxiconazole-Containing Formulations** **[% of Control Height]** | | | | | | |
|---|---|---|---|---|---|---|
| **CER-9802-g a.i./ 100 kg seed** | **8638-F MON 24531** | **8637-F MON 24532** | **8640-F MON 24533** | **8652-F MON 24534** | **978221 Ref MON 24555** | **Ref. OPUS** |
| 5 | - | - | - | - | - | 32.5 |
| 25 | 93.8 | 91.2 | 93.8 | 83.0 | 96.2 | 8.6 |
| 50 | 83.4 | 73.3 | 98.0 | 43.3 | 90.5 | - |
| 75 | 77.9 | 61.4 | 86.8 | 24.3 | 87.9 | - |

Epoxiconazole-containing formulations showed much less phytotoxicity than the commercial reference, Opus® . Likewise, tebuconazole-containing formulations showed less phytotoxicity than the commercial reference, Raxil®.

MON 38412 and MON 24555 were also tested as foliar treatments of soybean. At rates of 50 and 250 ppm active ingredient, soybean plants treated with MON 38412 and MON. 24555 as foliar treatments displayed substantially greater vigor than plants treated with Foliculur® and Opus®, particularly at the higher application rate.

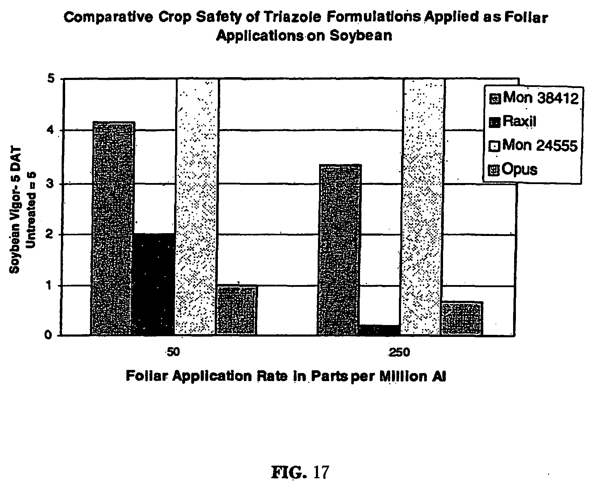

FIG. 17 shows the effects of foliar applications of MON 38412, MON 24555, Raxil® , and Opus® on the vigor of soybean plants five days after treatment (on a scale of 1-5, untreated control plants = 5).

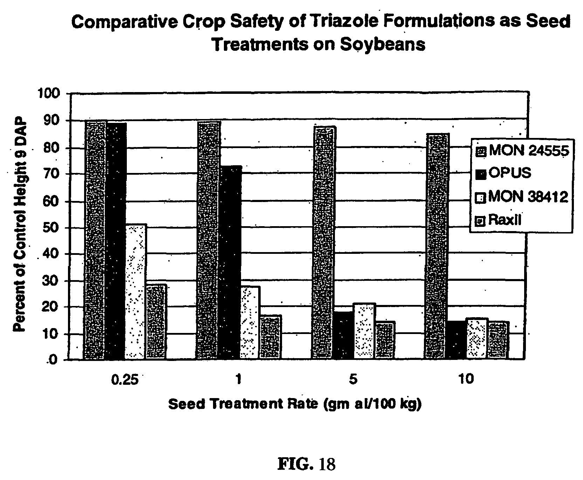

FIG. 18 shows the safety of MON 24555, Opus® , MON 38412, and Raxil® at 9 days after planting when applied as seed treatments on soybeans at various rates of application.

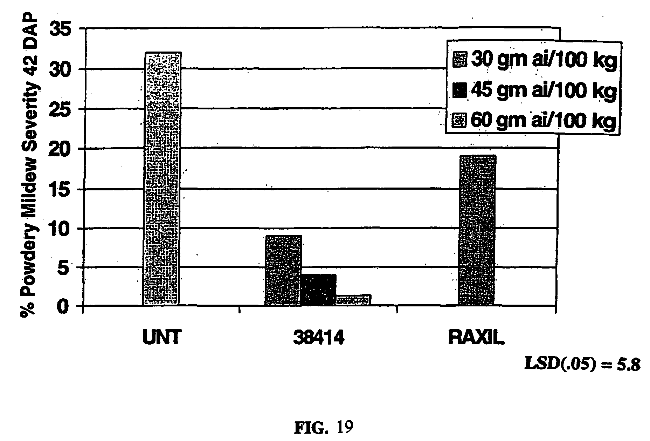

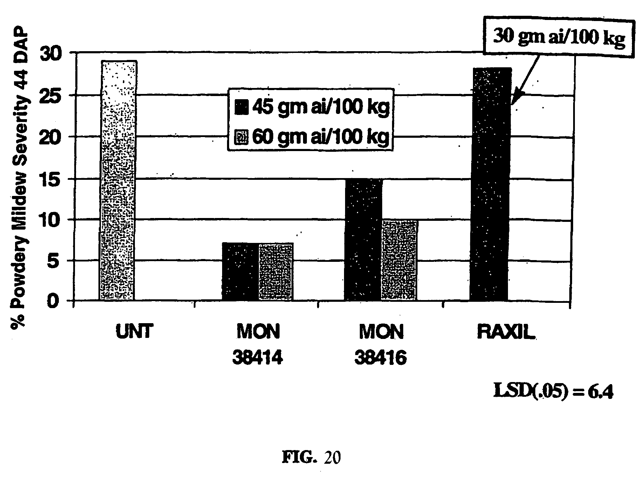

We conducted field trials to assess the effectiveness of seed treatments using microparticle formulations in controlling naturally occurring powdery mildew infections of wheat. Four replicates were performed for each treatment. FIG. 19 shows the effectiveness of seed treatments using MON 38414 (30,45, and 60 g tebuconazole/100 kg seed) and Raxil® (30 g tebuconazole/100 kg seed) in controlling the severity of powdery mildew 42-days on the wheat cultivar Artisan. FIG. 20 shows the effectiveness of seed treatments using MON 38414 and MON 38416 (45 and 60 g active ingredient/100 kg seed) and Raxil® (30 g tebuconazole/100 kg seed) in controlling the severity of powdery mildew 44 days after planting on the wheat cultivar Minaret.

The table below shows the safety of MON 24555, Opus® , MON 38412, and Raxil® at 16 days after planting when applied as seed treatments of pea *(Pisum sativum)* at various rates.

| **Treatment** | **Rate** **(gm ai/100 kg)** | **VIGOR** **UNTREATED = 100** **16 DAP** |
|---|---|---|
| MON 24555 | 0.25 | 0 |
| MON 24555 | 1 | 0.75 |
| MON 24555 | 5 | 0 |
| MON 24555 | 10 | 0.5 |
| OPUS | 0.25 | 0.75 |
| OPUS | 1 | 1:5 |
| OPUS | 5 | 4 |
| OPUS | 10 | 5 |
| | | |
| MON 38412 | 0.25 | 0.5 |
| MON 38412 | 1 | 0.5. |
| MON 38412 | 5 | 0.75 |
| MON 38412 | 10 | 0.5 |
| | | |
| RAXIL | 0.25 | 1.25 |
| RAXIL | 1 | 0.75 |
| RAXIL | 5 | 1.5 |
| RAXIL | 10 | 1 |

The table below shows the safety of NBP 6237101 and Sportak® , a commercial fast-release form of prochloraz, when applied as seed treatments to wheat (cv. Ritmo) at various rates. These results show that NBP 623 6237101 significantly improved the safety of prochloraz, resulting in an increase in the total number of germinants by 11 days after planting and the average height of germinants.

| **Treatment** | **Application Rate** **(g.a.i./100 kg seed)** | **5 DAP** | **# Plants** **8 DAP** | **11 DAP** | **Height (cm)** **12 DAP** |
|---|---|---|---|---|---|
| 6237101 | 50 | 72.3 | 95.0 | 92.2 | 40.5 |
| 6237101 | 100 | 86.3 | 92.2 | 100.3 | 34.1 |
| 6237101 | 200 | 72.2 | 92.5 | 95.0 | 34.3 |
| Sportak® | 50 | 39.6 | 73.3 | 75.8 | 44.9 |
| Sportak® | 100 | 5.3 | 51.4 | 64.5 | 32.0 |
| Sportak® | 200 | 0.0 | 29.7 | 46.1 | 17.3 |
| LSD (0.5) | | | | 16.6 | 9.6 |

### Example 24

We evaluated microparticle formulations containing cyproconazole for efficacy and duration in controlling brown leaf rust of wheat (caused by *Puccinia recondita*) in greenhouse experiments. Wheat seed (cv. Fortuna) were treated with test treatments (5932839A, MON 24682, or MON 24647, all at 32 g cyproconazole per 100 kg seed) and Alto® 005LS (at 1 g cyproconazole per 100 kg seed) and seeded in standard 4" square pots containing. sterilized Dupe silt loam soil. Seeding was done at a rate of 1 seed per pot, with four replicate pots of each treatment rate. Seeds were covered with approximately 2 cm of the same soil and incubated under a 12 hour photoperiod, at 50% relative humidity: Growth room temperatures were maintained at 16° C during the 12 hour light period and at 12C during the 12 hour dark period. Twenty days after planting, plants grown from treated seed were inoculated with urediospores of *P. recondita.* The inoculated plants were incubated for 24 hours in a mist tent at 20°C to allow for disease infection. Disease severity was evaluated 8-10 days after inoculation.

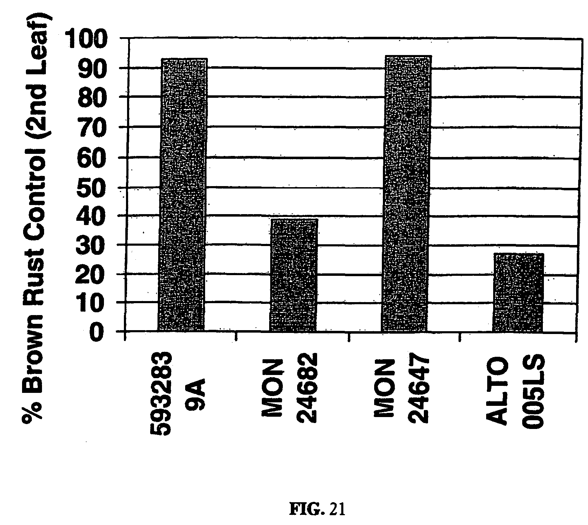

FIG. 21 shows control of brown rust of wheat by seed coatings comprising matrix microparticle formulations NBP 5932839A, MON 24682, MON 24647 (each at 32 g cyproconazole per 100 kg seed) and Alto® 005LS (1 g cyproconazole per 100 kg seed). Plants were inoculated 20 days after planting (second leaf stage). Disease severity in untreated control plants was 61.3%. We observed an increase in the efficacy and duration of disease control by matrix microparticle formulations, which permitted treatment of plants with a higher rate of the active ingredient than would be tolerated if the plants were treated with a standard formulation such as Alto® 005LS.

## Claims

1. A controlled-release composition for delivering an agricultural chemical to a plant, the composition comprising microparticles having an average diameter of 0.2 microns to 200 microns, the microparticles each comprising a polymer matrix and at least one agricultural chemical selected from cyproconazole, epoxiconazole or tebuconazole, distributed throughout the polymer matrix.

2. The composition of claim 1 wherein the microparticles comprise 1 to 50% by weight of the agricultural chemical, preferably 15% to 50% by weight of the agricultural chemical.

3. The composition of claim 1 or 2 wherein the microparticles comprise 50% to 99% by weight of the polymer matrix, preferably 50% to 85% by weight of the polymer matrix.

4. The composition of any one of claims 1-3 wherein the microparticles have an average diameter of one micron to fifty microns, preferably three microns to fifty microns.

5. The composition of any of claims 1-4 that is selected from the group consisting of a suspension of the microparticles in an aqueous medium, a wettable powder, wettable granules, dry granules, and a seed coating.

6. The composition of any of claims 1-5 comprising an amount of the agricultural chemical and releasing the agricultural chemical at a rate such that the composition delivers an agriculturally active amount of the agricultural chemical to the plant for a period of at least two weeks to twelve weeks.

7. The composition of any of claims 1-6 wherein the polymer is selected from the group consisting of poly(methylmethacrylate), poly(lactic acid), poly(lactic acid-glycolic acid) copolymers, cellulose acetate butyrate, poly(styrene), hydroxybutyric acid-hydroxyvaleric acid copolymers, styrene maleic anhydride copolymers, poly(methylvinyl ether-maleic acid), poly( caprolactone), poly(n-amylmethacrylate), wood rosin, polyanhydrides, polyorthoesters, poly(cyanoacrylates), poly(dioxanone), ethyl cellulose, ethyl vinyl acetate polymers, poly(ethylene glycol), poly(vinylpyrrolidone), acetylated mono-, di-, and triglycerides, poly(phosphazene), chlorinated natural rubber, vinyl polymers, polyvinyl chloride, hydroxyalkylcelluloses, polybutadiene, polyurethane, vinylidene chloride polymers, styrene-butadiene copolymers, styrene-acrylic copolymers, alkylvinylether polymers, cellulose acetate phthalates, ethyl vinyl phthalates, cellulose triacetate, polyanhydrides, polyglutamates, polyhydroxy butyrates, polyvinyl acetate, vinyl acetate-ethylene copolymers, vinyl acetate-vinylpyrrolidone copolymers, acrylic polymers, alkyl acrylate polymers, aryl acrylate polymers, aryl methacrylate polymers, poly(caprolactams), epoxy resins, polyamine epoxy resins, polyamides, polyvinyl alcohol polymers, polyalkyd resins, phenolic resins, abietic acid resins, silicones, polyesters, and copolymers and combinations thereof.

8. The composition of claim 7 wherein the polymer is selected from the group consisting of poly(methylmethacrylate), poly(styrene), poly(styrene maleic anhydride copolymer), poly(lactic acid), combinations of poly(lactic acid) with poly(styrene), and cellulose acetate butyrate.

9. The composition of any of claims 1 -8 further comprising a dispersing agent, preferably a dispersing agent selected from the group consisting of methyl cellulose, poly(vinyl alcohol), lecithin, and combinations thereof.

10. A seed comprising a seed coating comprising the composition of any of claims 1-9.

11. A method of delivering an agricultural chemical to a plant comprising applying an amount of a composition of any of claims 1-9 to soil or to foliage of the plant such that about 1 g to about 10 kg of the agricultural chemical is applied per hectare.

12. A method of delivering an agricultural chemical to a plant comprising coating a seed with an amount of composition of any of claims 1-9 such that about 1 gram to about 500 grams of the agricultural chemical is applied to 100 kg of seed.

13. A method of producing a composition according to any one of claims 1-9 comprising microparticles for controlled release of an agricultural chemical, the method comprising the following steps:
(a) dissolving at least one agricultural chemical selected from cyproconazole, epoxyconazole or tebuconazole, and a polymer in an organic solvent to form a hydrophobic solution;
(b) mixing the hydrophobic solution and an aqueous medium at a shear rate and for a time period sufficient to produce an emulsion having droplets of the hydrophobic solution dispersed in the aqueous medium;
(c) evaporating the organic solvent from the emulsion to produce a plurality of microparticles having an average diameter of 0.2 micron to 200 microns and comprising said at least one agricultural chemical distributed throughout a polymer matrix.

14. The method of claim 13 comprising dissolving said at least one agricultural chemical such that the microparticles comprise 15% to 50% by weight of the agricultural chemical.

## Patentansprüche

1. Zusammensetzung mit regulierter Freisetzung, um eine landwirtschaftliche Chemikalie einer Pflanze zuzuführen, wobei die Zusammensetzung Mikroteilchen mit einem durchschnittlichen Durchmesser von 0,2 µm bis 200 µm umfasst, wobei die Mikroteilchen jeweils eine Polymermatrix und mindestens eine landwirtschaftliche Chemikalie umfassen, gewählt aus Cyproconazol. Epoxiconazol oder Tebuconazol, welche über die gesamte Polymermatrix verteilt ist.

2. Zusammensetzung nach Anspruch 1, wobei die Mikroteilchen 1 bis 50 Gew.-% der landwirtschaftlichen Chemikalie, vorzugsweise 15 bis 50 Gew.-% der landwirtschaftlichen Chemikalie. umfassen.

3. Zusammensetzung nach Anspruch 1 oder 2, wobei die Mikroteilchen 50 bis 99 Gew.-% der Polymermatrix, vorzugsweise 50 bis 85 Gew.-% der Polymermatrix. umfassen.

4. Zusammensetzung nach mindestens einem der Ansprüche 1-3. wobei die Mikroteilchen einen durchschnittlichen Durchmesser von 1 µm bis 50 µm; vorzugsweise 3 µm bis 50 µm, besitzen.

5. Zusammensetzung nach mindestens einem der Ansprüche 1-4, welche gewählt ist aus der Gruppe, bestehend aus einer Suspension der Mikroteilchen in einem wässrigen Medium, einem benetzbaren Pulver, benetzbaren Granulaten, trockenen Granulaten und einer Samenbeschichtung.

6. Zusammensetzung nach mindestens einem der Ansprüche 1-5, umfassend eine Menge der landwirtschaftlichen Chemikalie und die Freisetzung der landwirtschaftlichen Chemikalie mit einer solchen Rate, dass die Zusammensetzung eine landwirtschaftlich wirksame Menge der landwirtschaftlichen Chemikalie der Pflanze über einen Zeitraum von mindestens zwei Wochen bis zwölf Wochen zuführt.

7. Zusammensetzung nach mindestens einem der Ansprüche 1-6, wobei das Polymer aus der Gruppe gewählt ist, bestehend aus Polymethylmethaerylat, Polymilchsäure. Poly(milchsäure-glykolsäure)-Copolymeren. Celluloseacetatbutyrat, Polystryrol. Hydroxybuttersäure-Hydroxyvalerinsäure-Copolymeren. Styrol-Maleinsäureanhydrid-Copolymeren, Poly(methylvinylether-maleinsäure), Polycaprolacton, Poly-n-amylmethacrylat, Holz-Kolophonium, Polyanhydriden, Polyorthoestern, Polycyanoacrylaten, Polydioxanon, Ethylcellulose, Ethylvinylacetatpolymeren, Polyethylenglykol. Polyvinylpyrrolidon, acetylierten Mono-, Di- und Triglyceriden, Polyphosphazen. chloriertem natürlichen Kautschuk, Vinylpolymeren, Polyvinylchlorid, Hydroxyalkylcellulosen, Polybutadien, Polyurethan, Vinylidenchloridpolymeren, Styrol-Butadien-Copolymeren, Styrol-Acrylsäure-Copolymeren. Alkylvinyletherpolymeren, Celluloseacetatphthalaten, Ethylvinylphthal&ten, Cellulosetriacetat. Polyanhydriden, Polyglutamaten. Polyhydroxybutyraten, Polyvinylacetat, Vinylacetat-Ethylen-Copolymeren, Vinylacetat-Vinylpyrrolidon-Copolymeren, Acrylpolymeren, Alkylacrylatpolymeren, Arylacrylatpolymeren, Arylmethacrylatpolymeren, Polycaprolactamen, Epoxyharzen, Polyaminepoxyharzen, Polyamiden. Polyvinylalkoholpolymeren. Polyalkydharzen. Phenolharzen, Abietinsäureharzen, Siliconen, Polyester und Copolymeren und Kombinationen hiervon.

8. Zusammensetzung nach Anspruch 7, wobei das Polymer aus der Gruppe gewählt ist, bestehend aus Polymethylmethacrylat. Polystryrol, Poly(styrol-maleinsäureanhydrid)-Copolymer, Polymilchsäure, Kombinationen von Polymilchsäure mit Polystyrol und Celluloseacetatbutyrat.

9. Zusammensetzung nach mindestens einem der Ansprüche 1-8, umfassend weiterhin ein Dispergiermittel, vorzugsweise ein Dispergiermittel, gewählt aus der Gruppe, bestehend aus Methylcellulose, Polyvinylalkohol. Lecithin und Kombinationen hiervon.

10. Samen, umfassend eine Samenbeschichtung, umfassend die Zusammensetzung nach mindestens einem der Ansprüche 1-9.

11. Verfahren zum Zufuhren einer landwirtschaftlichen Chemikalie zu einer Pflanze, umfassend das Aufbringen einer Menge. einer Zusammensetzung nach mindestens einem der Ansprüche 1-9 auf den Boden oder das Blattwerk der Pflanze, so dass etwa I Gramm bis etwa 10 kg der landwirtschaftlichen Chemikalie pro Hektar aufgebracht werden.

12. verfahren zum Zufuhren einer landwirtschaftlichen Chemikalie zu einer Pflanze, umfassend das Beschichten eines Samens mit einer Menge einer Zusammensetzung nach mindestens einem der Ansprüche 1-9, so dass etwa 1 g bis etwa 500 g der landwirtschaftlichen Chemikalie auf 100 kg Samen aufgebracht werden.

13. Verfahren zum Herstellen einer Zusammensetzung nach mindestens einem der Ansprüche 1-9, umfassend Mikroteilchen mit regulierter Freisetzung einer landwirtschaftlichen Chemikalie. wobei das Verfahren die folgenden Schritte umfasst:
(a) Auflösen mindestens einer landwirtschaftlichen Chemikalie, gewählt aus Cyproconazol, Epoxyconazol oder Tebuconazol. und eines Polymeren in einem organischen Lösungsmittel zur Bildung einer hydrophoben Lösung:
(b) Vermischen der hydrophoben Lösung und eines wäserigen Mediums mit einer Scherrate und über einen ausreichenden Zeitraum zur Erzeugung einer Emulsion, bei welcher Tropfen der hydrophoben Lösung in dem wässrigen Medium dispergiert sind:
(c) Verdampfen des organischen Lösungsmittels aus der Emulsion zur Erzeugung einer Vielzahl von Mikroteilchen mit einem durchschnittlichen Durchmesser von 0,2 µm bis 200 µm, und umfassend mindestens eine landwirtschaftliche Chemikalie verteilt über eine gesamte Polymermatrix.

14. Verfahren nach Anspruch 13. umfassend das Auflösen der mindestens einen landwirtschaftlichen Chemikalie, so dass die Mikroteilehen 15 bis 50 Gew.-% der landwirtschaftlichen Chemikalie umfassen.

## Revendications

1. Composition à libération contrôlée pour délivrance d'un produit chimique agricole à une plante, la composition comprenant des microparticules ayant un diamètre moyen de 0,2 micron à 200 microns, les microparticules comprenant chacune une matrice polymère et au moins un produit chimique agricole choisi parmi le cyproconazole, l'époxyconazole ou le tébuconazole, distribué partout dans la matrice polymère.

2. Composition selon la revendication 1 dans laquelle les microparticules comprennent 1% à 50% en poids du produit chimique agricole, de préférence 15% à 50% en poids du produit chimique agricole.

3. Composition selon la revendication 1 ou 2 dans laquelle les microparticules comprennent 50% à 99% en poids de la matrice polymère, de préférence 50% à 85% en poids de la matrice polymère.

4. Composition selon l'une quelconque des revendications 1-3 dans laquelle les microparticules ont un diamètre moyen d'un micron à cinquante microns, de préférence trois microns à cinquante microns.

5. Composition selon l'une quelconque des revendications 1-4 qui est choisie dans le groupe constitué par une suspension des microparticules dans un milieu aqueux, une poudre mouillable, des granulés mouillables, des granulés secs, et un enrobage.

6. Composition selon l'une quelconque des revendications 1-5 comprenant une certaine quantité du produit chimique agricole et libérant le produit chimique agricole à une vitesse telle que la composition délivre une quantité agricolement active du produit chimique agricole à la plante sur une période d'au moins deux semaines à douze semaines.

7. Composition selon l'une quelconque des revendications 1-6 dans laquelle le polymère est choisi dans le groupe constitué par le polyméthylméthacrylate, le polyacide lactique, les copolymères poly(acide lactique-acide glycolique), l'acétate-butyrate de cellulose, le polystyrène, les copôlymères acide hydroxybutyrique-acide hydroxyvalérique, les copolymères styrène-anhydride maléique, le poly(éther méthylvinylique-acide maléique), la polycaprolactone, le poly(n-amylméthacrylate), la colophane de bois, les polyanhydrides, les polyorthoesters, les polycyanoacrylates, la polydioxanone, l'éthylcellulose, les polymères d'acétate d'éthylvinyle, le polyéthylène glycol, la polyvinylpyrrolidone, les mono-, di-, et triglycérides acétylés, le polyphosphazène, le caoutchouc naturel chloré, les polymères vinyliques, le polychlorure de vinyle, les hydroxyalkylcelluloses, le polybutadiène, le polyuréthane, les polymères de chlorure de vinylidène, les copolymères styrène-butadiène, les copolymères styrène-acryliques, les polymères d'alkylvinyléther, les phtalates d'acétate de cellulose, les phtalates d'éthylvinyle, le triacétate de cellulose, les polyanhydrides, les polyglutamates, les polyhydroxybutyrates, l'acétate de polyvinyle, les copolymères acétate de vinyle-éthylène, les copolymères acétate de vinyle-vinylpyrrolidone, les polymères acryliques, les polymères d'acrylate d'alkyle, les polymères d'acrylate d'aryle, les polymères de méthacrylate d'aryle, les polycaprolactames, les résines époxy, les résines époxy-polyamine, les polyamides, les polymères d'alcool polyvinylique, les résines polyalkyde, les résines, phénoliques, les résines d'acide abiétique, les silicones, les polyesters, et leurs copolymères et combinaisons.

8. Composition selon la revendication 7 dans laquelle le polymère est choisi dans le groupe constitué par le polyméthylméthacrylate, le polystyrène, les copolymères poly(styrène-anhydride maléique), le polyacide lactique, les combinaisons de polyacide lactique avec le polystyrène, et l'acétate-butyrate de cellulose.

9. Composition selon l'une quelconque des revendications 1-8 comprenant en outre un agent dispersant, de préférence un agent dispersant choisi dans le groupe constitué par la méthylcellulose, un alcool polyvinylique, la lécithine, et leurs combinaisons.

10. Semence comprenant un enrobage comprenant la combinaison selon l'une quelconque des revendications 1-9.

11. Procédé de délivrance d'un produit chimique agricole à une plante comprenant l'application d'une certaine quantité d'une composition selon l'une quelconque des revendications 1-9 à un sol ou au feuillage de la plante de telle sorte qu'environ 1 g à environ 10 kg du produit chimique agricole est appliqué par hectare.

12. Procédé de délivrance d'un produit chimique agricole à une plante comprenant l'enrobage d'une semence avec une certaine quantité d'une composition selon l'une quelconque des revendications 1-9 de telle sorte qu'environ 1 gramme à environ 500 grammes du produit chimique agricole est appliqué à 100 kg de semences.

13. Procédé de production d'une composition selon l'une quelconque des revendications 1-9 comprenant des microparticules pour libération contrôlée d'un produit chimique agricole, le procédé comprenant les étapes suivantes :
(a) dissoudre au moins un produit chimique agricole choisi parmi le cyproconazole, l'époxyconazole ou le tébuconazole et un polymère dans un solvant organique pour former une solution hydrophobe ;
(b) mélanger la solution hydrophobe et un milieu aqueux à une vitesse de cisaillement et sur une période de temps suffisantes pour produire une émulsion ayant des gouttelettes de la solution hydrophobe dispersées dans le milieu aqueux ;
(c) évaporer le solvant organique de l'émulsion pour produire une pluralité de microparticules ayant un diamètre moyen de 0,2 micron à 200 microns et comprenant ledit au moins un produit chimique agricole distribué partout dans une matrice polymère.

14. Procédé selon la revendication 13 comprenant la dissolution dudit au moins un produit chimique agricole de telle sorte que les microparticules comprennent 15% à 50% en poids du produit chimique agricole.
